# EUROPEAN PATENT APPLICATION

(11) **EP 4 641 840 A1**
(43) Date of publication of application: **29.10.2025**
(21) Application number: 23906693.9
(22) Date of filing: 04.12.2023
(51) Int. Cl.: H01Q 21/24, G01S 7/02, H01Q 1/42, H01Q 13/08, H01Q 21/06

(54) **ELECTRONIC DEVICE AND TRANSMISSION/RECEPTION SYSTEM**

(30) Priority: 20.12.2022 JP 2022203767
(71) Applicant: Kyocera Corporation, Kyoto-shi, Kyoto 612-8501 (JP)
(72) Inventor: KAWAJI Satoshi, Kyoto-shi, Kyoto 612-8501 (JP); YOSHIKAWA Hiromichi, Kyoto-shi, Kyoto 612-8501 (JP)
(74) Representative: Viering, Jentschura & Partner mbB Patent- und Rechtsanwälte
(86) International application number: PCT/JP2023/043333
(87) International publication number: WO 2024/135327

(57) **Abstract**

An electronic device includes a first reception antenna having a directivity in a first direction, and a second reception antenna having a directivity in a second direction different from the first direction. As a polarization direction of a radio wave received by the first reception antenna becomes closer to a first polarization direction, a gain of reception by the first reception antenna becomes greater. As a polarization direction of a radio wave received by the second reception antenna becomes closer to a second polarization direction different from the first polarization direction, a gain of reception by the second reception antenna becomes greater.

## Description

### CROSS-REFERENCE TO RELATED APPLICATIONS

This application claims priority from Japanese Patent Application No. 2022-203767 filed in Japan on December 20, 2022, the entire disclosure of which is incorporated herein by reference.

### TECHNICAL FIELD

The present disclosure relates to an electronic device and a transmitting-and-receiving system.

### BACKGROUND OF INVENTION

For example, in fields of automobile-related industries and the like, technologies for measuring a distance between a vehicle of interest and a predetermined object, and the like, are regarded as important. More particularly, various studies have recently been conducted on RADAR (radio detecting and ranging) technologies for measuring a distance, etc. to an object such as an obstacle by transmitting a radio wave such as a millimeter wave and then receiving a wave reflected off the object. The importance of such a technique for measuring a distance, etc. is expected to grow more and more in the future with progresses of technologies for assisting drivers in driving and autonomous-driving-related technologies for partially or entirely automating driving, etc.

In the above-described radar technologies and the like, proposals with various modes of use in mind have been presented. For example, Patent Literature 1 proposes an antenna configuration including a first antenna formed as an array antenna and a second antenna operable as a transmission antenna. This antenna configuration includes a transmission antenna having two kinds of plane of polarization connected to the same feeding point. Patent Literature 2 proposes a technique for improving the resolution of a radar system that detects an obstacle at, for example, a railroad crossing, etc. By performing switching between two kinds of reception antenna having different planes of polarization by means of a switch, this radar system is capable of virtually doubling distance resolution. Patent Literature 3 proposes a radar unit operable using a plurality of polarizations. Patent Literature 4 proposes that a reflected wave coming from a target object is received, with delay time left intact, by means of a reception antenna by delaying one of transmission waves, instead of performing transmission with a switchover between horizontal polarization and vertical polarization.

### CITATION LIST

### PATENT LITERATURE

Patent Literature 1: Japanese Unexamined Patent Application Publication (Translation of PCT Application) No. 2021-514153
Patent Literature 2: Japanese Unexamined Patent Application Publication No. 2007-17356
Patent Literature 3: Japanese Unexamined Patent Application Publication (Translation of PCT Application) No. 2021-507219
Patent Literature 4: Japanese Unexamined Patent Application Publication No. 2010-14533

### SUMMARY

An electronic device according to an embodiment includes a first reception antenna having a directivity in a first direction, and a second reception antenna having a directivity in a second direction different from the first direction.

As a polarization direction of a radio wave received by the first reception antenna becomes closer to a first polarization direction, a gain of reception by the first reception antenna becomes greater.

As a polarization direction of a radio wave received by the second reception antenna becomes closer to a second polarization direction different from the first polarization direction, a gain of reception by the second reception antenna becomes greater.

An electronic device according to an embodiment includes a first transmission antenna configured to transmit, using first polarization, a radio wave having a directivity in a first direction, and a second transmission antenna configured to transmit, using second polarization, a radio wave having a directivity in a second direction different from the first direction.

The first transmission antenna transmits a signal in the first polarization direction by means of a first feeding layout.

The second transmission antenna transmits a signal in the second polarization direction by means of a second feeding layout.

A transmitting-and-receiving system according to an embodiment includes a transmitter including transmission antennas, and a receiver including reception antennas.

The transmitter includes a first transmission antenna configured to transmit, using first polarization, a radio wave having a directivity in a first direction, and a second transmission antenna configured to transmit, using second polarization, a radio wave having a directivity in a second direction different from the first direction.

The receiver includes a first reception antenna having a directivity in the first direction, and a second reception antenna having a directivity in the second direction.

As a polarization direction of a radio wave received by the first reception antenna becomes closer to a first polarization direction, a gain of reception by the first reception antenna becomes greater.

As a polarization direction of a radio wave received by the second reception antenna becomes closer to a second polarization direction different from the first polarization direction, a gain of reception by the second reception antenna becomes greater.

### BRIEF DESCRIPTION OF THE DRAWINGS

FIG.1 is a diagram illustrating a configuration of an electronic device according to an embodiment.
FIG.2 is a diagram illustrating a configuration of an electronic device according to an embodiment.
FIG. 3 is a diagram for explaining directivities of an electronic device according to an embodiment.
FIG. 4 is a top view of an antenna of an electronic device according to an embodiment.
FIG. 5 is a top view of a three-dimensional polar coordinate plot of gains of an electronic device according to an embodiment.
FIG. 6 is a graph illustrating a plot of gains of an electronic device according to an embodiment.
FIG. 7 is a diagram for explaining a simulation of operation performed by an electronic device according to an embodiment.
FIG. 8 is a diagram illustrating a simulation result of operation performed by an electronic device according to an embodiment.
FIG. 9 is a diagram illustrating a simulation result of operation performed by an electronic device according to an embodiment.
FIG. 10 is a diagram for explaining a simulation of operation performed by an electronic device according to an embodiment.
FIG. 11 is a diagram illustrating a simulation result of operation performed by an electronic device according to an embodiment.
FIG. 12 is a diagram illustrating a simulation result of operation performed by an electronic device according to an embodiment.
FIG. 13 is a diagram for explaining a simulation of operation performed by an electronic device according to an embodiment.
FIG. 14 is a diagram illustrating a simulation result of operation performed by an electronic device according to an embodiment.
FIG. 15 is a diagram illustrating a simulation result of operation performed by an electronic device according to an embodiment.
FIG. 16 is a diagram for explaining a simulation of operation performed by an electronic device according to an embodiment.
FIG. 17 is a diagram illustrating a simulation result of operation performed by an electronic device according to an embodiment.
FIG. 18 is a diagram illustrating a simulation result of operation performed by an electronic device according to an embodiment.
FIG. 19 is a diagram illustrating a simulation result of operation performed by an electronic device according to an embodiment.
FIG. 20 is a diagram illustrating a simulation result of operation performed by an electronic device according to an embodiment.
FIG. 21 is a diagram illustrating a simulation result of operation performed by an electronic device according to an embodiment.
FIG. 22 is a diagram illustrating a simulation result of operation performed by an electronic device according to an embodiment.
FIG.23 is a diagram illustrating a configuration of a redome of an electronic device according to an embodiment.
FIG. 24 is a diagram illustrating a configuration of an electronic device according to a comparative example of an embodiment.
FIG. 25 is a diagram illustrating a configuration of an electronic device according to a comparative example of an embodiment.
FIG. 26 is a diagram for explaining a directivity of an electronic device according to a comparative example of an embodiment.

### DESCRIPTION OF EMBODIMENTS

In the above-described radar technologies and the like, making the directivity of a reception antenna changeable to different directions, even without the use of an RF switch, will enhance convenience in particular modes of use. An object of the present disclosure is to provide an electronic device and a transmitting-and-receiving system that can enhance convenience in object detection technologies such as millimeter-wave radar. An embodiment enables providing an electronic device and a transmitting-and-receiving system that can enhance convenience in object detection technologies such as millimeter-wave radar.

In the present disclosure, the term "electronic device" may refer to a device driven by electric power. An electronic device according to an embodiment may include at least one of a transmission antenna or a reception antenna. An electronic device according to an embodiment transmits, as a transmission wave, an electromagnetic wave from a transmission antenna. For example, when a predetermined object exists in the neighborhood of an electronic device according to an embodiment, at least a part of a transmission wave transmitted from the electronic device is reflected off the object to turn into a reflected wave. The electronic device is capable of detecting the object by receiving such a reflected wave by means of a reception antenna of the electronic device. For example, an electronic device according to an embodiment is capable of measuring a distance to a predetermined object. An electronic device according to an embodiment is capable of measuring a relative velocity, too, in relation to a predetermined object. An electronic device according to an embodiment is capable of measuring a direction in which a reflected wave coming from a predetermined object arrives at the electronic device (an angle of arrival), too.

An electronic device according to an embodiment, when installed in/on a roadside unit, etc. configured to monitor the traffic conditions of vehicular entities (moving bodies) such as automobiles is capable of detecting a predetermined object such as a moving body existing near the roadside unit. An electronic device according to an embodiment, when installed in/on any equipment such as a traffic light, is capable of detecting a predetermined object such as a moving body existing near the equipment.

An electronic device according to an embodiment may be typically a RADAR (radio detecting and ranging) sensor configured to transmit and receive a radio wave. However, an electronic device according to an embodiment is not limited to a radar sensor. These kinds of sensors can include, for example, patch antennas, etc. Since the RADAR technology and the like are already known, detailed descriptions will be sometimes omitted or simplified, where appropriate. In an electronic device according to an embodiment, for example, an LED or a laser, etc. may be used as a light source. In an electronic device according to an embodiment, for example, a photodiode, etc. may be used as a light-receiving element. In an electronic device according to an embodiment, for example, a lens, etc. may be used for directivity control.

In radar technologies, a method of estimating DOA (the direction of arrival) of a radio wave from a phase difference of the radio wave received by a plurality of antennas such as an array antenna (antenna array) is known. As such a method of estimating the direction of arrival, for example, a MUSIC (multiple signal classification) method, an ESPRIT (estimation of signal parameter via rotational invariance techniques) method, and the like are known. At least two antennas suffice for estimating the direction of arrival of a radio wave. On the other hand, all of the plurality of reception antennas may be configured as array antennas of the same shape so as to raise the angular resolution of estimating the direction of arrival (so as to increase the degree of freedom in array (when N denotes the number of antennas, N-1)).

To lengthen a distance over which detection can be performed by a radar, it is necessary to increase an antenna gain. To increase the antenna gain, an array antenna in which antenna elements are arranged regularly may be configured. For example, in a case of a vehicle-mounted corner radar, by arranging array antennas longitudinally, it is possible to configure an antenna that has a directivity whose beam width is wide in a horizontal direction and narrow in a vertical direction. For example, in a case of a forward-detecting radar, by arranging antennas longitudinally and laterally and narrowing a beam in horizontal and vertical directions, it is possible to configure a high-gain antenna.

In related art, an array antenna that has a high-gain narrow-beam-width antenna directivity is used by synthesizing transmission or reception of a radio wave by a plurality of antenna elements. In such an array antenna, it is possible to adjust a maximum gain, directivity orientation, a beam width, and the like by controlling the number of antenna elements, an interval of antenna elements, a phase difference between antenna elements, and the like. As array antenna characteristics, to lengthen a radar detection distance, there is a need to increase a gain. On the other hand, when the gain increases, the beam width of the antenna decreases and, therefore, the range of detection becomes narrower. In general, when directivities in different directions are synthesized, interference between antenna elements could happen. In such an antenna, antenna characteristics cannot be obtained by simple summation. Therefore, designing such an antenna could be complex.

In a transmission antenna, it is possible to differentiate antenna characteristics by adopting different gains, directivities, and beam widths for a plurality of ports respectively. On the other hand, in a reception antenna, for the purpose of estimating the direction of arrival with high precision, with the number of ports limited, there is a need to make the antenna characteristics of all of the ports equal. As mentioned above, if there is a reception antenna having at least two ports, it is possible to estimate the direction of arrival of a radio wave. However, it is difficult to estimate the direction of arrival with high precision by means of a two-port reception antenna.

The following mode of use, for example, can also be imagined: a mode of use in which both a long-range object and a short-range object (for example, an automobile and a pedestrian) are to be detected by means of a millimeter-wave radar installed at a relatively high position (e.g., equal to or greater than 2.5 m) such as on a traffic light or on a pole on which a traffic light is installed. In such a case, orienting the directivity frontward is desirable for detecting an object existing at a long distance, and orienting the directivity either down or in an obliquely downward direction is desirable for detecting an object existing at a short distance.

However, orienting the directivity downward by means of phase control results in a decrease in gain in a frontward direction. Therefore, it is difficult to secure an antenna gain in two directions by using a single-system antenna. Coping with such a situation by, for example, switching a reception antenna by means of a switch seems to be possible. However, RF switches supporting a 79 GHz band are not easily available. In addition, NF (noise figure) degrades when a reception antenna is switched by means of a switch. Therefore, such a reception antenna could cause degradation in reception sensitivity. When plural antennas are arranged, interference between the antennas also needs to be addressed.

An electronic device according to an embodiment can support the above-described modes of use, too. Prior to describing an electronic device according to an embodiment, first, an electronic device according to a comparative example of an embodiment will be described below.

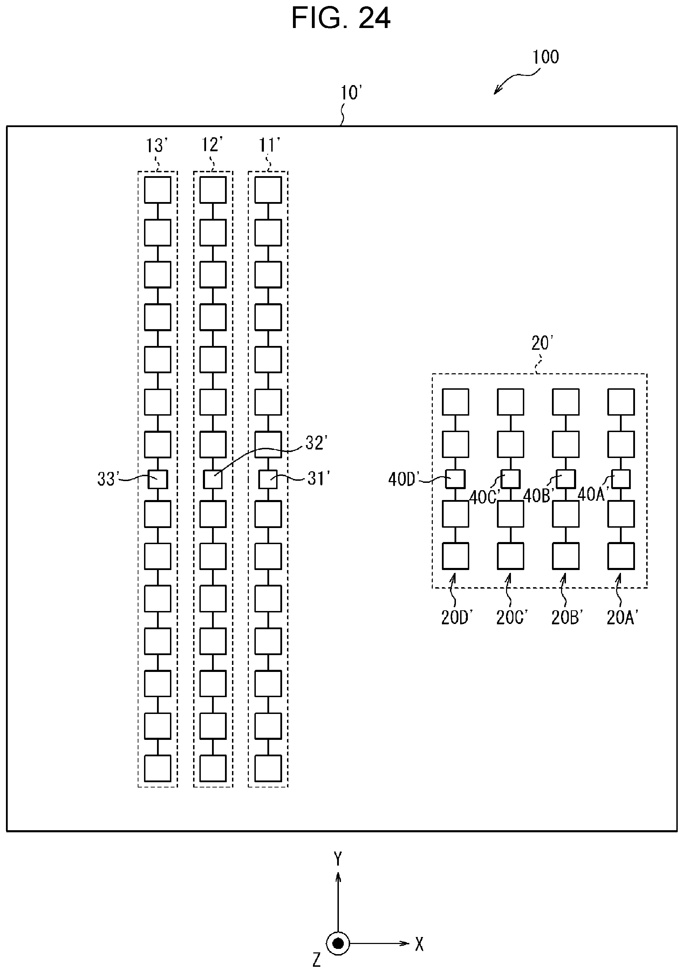

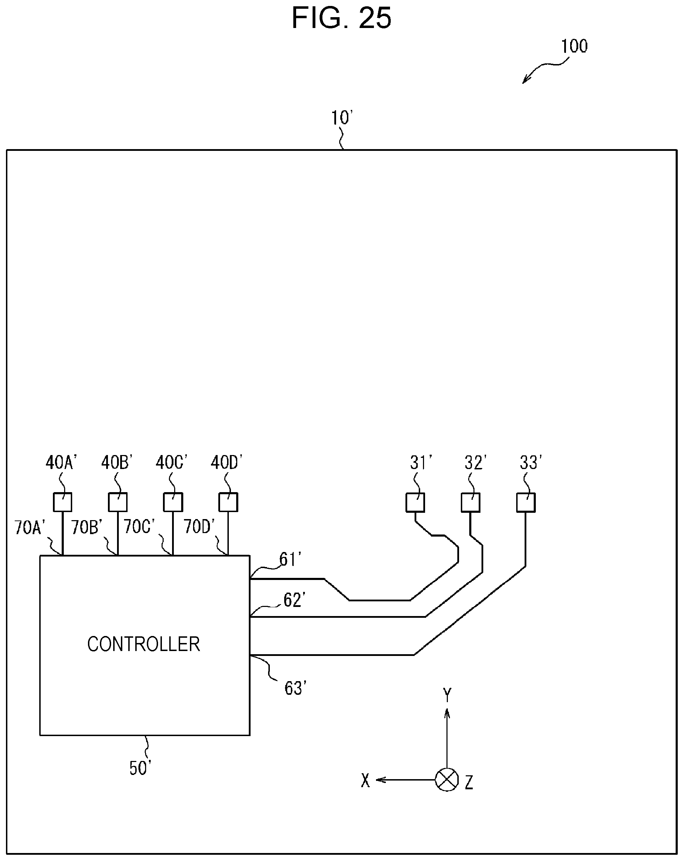

FIGS. 24 and 25 are diagrams illustrating a configuration of an electronic device according to a comparative example of an embodiment. FIG. 24 illustrates an electronic device according to a comparative example of an embodiment viewed in a predetermined direction. FIG. 25 illustrates an electronic device according to a comparative example of an embodiment viewed in a direction that is the opposite of the predetermined direction in FIG. 24.

In FIGS. 24 and 25, the direction of an X axis may be defined as a horizontal direction or a left-right direction. In FIGS. 24 and 25, the direction of a Y axis may be defined as a vertical direction or an up-down direction. More particularly, in FIGS. 24 and 25, a positive Y-axis direction may be defined as an up direction, and a negative Y-axis direction may be defined as a down direction. In FIGS. 24 and 25, the direction of a Z axis may be defined as a front-rear direction. More particularly, in FIGS. 24 and 25, a positive Z-axis direction may be defined as a forward direction or a frontward (front) direction, and a negative Z-axis direction may be defined as a backward direction or a rearward direction.

As illustrated in FIGS. 24 and 25, an electronic device 100 according to a comparative example of an embodiment may include a substrate 10'. The substrate 10' may be a circuit board used for ordinary electrical circuits or electronic circuits. The surface of the substrate 10' illustrated in FIG. 24 (i.e., the surface of the substrate 10' on the positive Z-axis side) will be referred to also as a front-side surface or a front surface, for convenience sake. The surface of the substrate 10' illustrated in FIG. 25 (i.e., the surface of the substrate 10' on the negative Z-axis side) will be referred to also as a back-side surface or a back surface, for convenience sake. FIGS. 24 and 25 illustrate functional units of a transmission system and a reception system of the electronic device 100.

As illustrated in FIG. 24, the electronic device 100 includes a first transmission antenna 11', a second transmission antenna 12', and a third transmission antenna 13' on the front surface of the substrate 10'. As illustrated in FIG. 24, the electronic device 100 includes a reception antenna 20' on the front surface of the substrate 10'. The first transmission antenna 11', the second transmission antenna 12', the third transmission antenna 13', and the reception antenna 20' may be planar antennas (patch antennas) commonly used in millimeter-wave radar.

As illustrated in FIG. 24, each of the first transmission antenna 11', the second transmission antenna 12', and the third transmission antenna 13' includes a plurality of radiating elements. Each of these radiating elements may be made of a metal material such as copper. In the example illustrated in FIG. 24, each of the first transmission antenna 11', the second transmission antenna 12', and the third transmission antenna 13' includes fourteen radiating elements in total, seven of which on the upper side and seven of which on the lower side. In each of the first transmission antenna 11', the second transmission antenna 12', and the third transmission antenna 13', the seven radiating elements on the upper side are electrically connected in series in the vertical direction, and the seven radiating elements on the lower side are also electrically connected in series in the vertical direction.

As illustrated in FIG. 24, in the first transmission antenna 11', the lower end of the seven radiating elements connected in series on the upper side, and the upper end of the seven radiating elements connected in series on the lower side, are each electrically connected to a feeding point 31'. The feeding point 31' feeds power to the plurality of radiating elements that constitute the first transmission antenna 11'. In the first transmission antenna 12', the lower end of the seven radiating elements connected in series on the upper side, and the upper end of the seven radiating elements connected in series on the lower side, are each electrically connected to a feeding point 32'. The feeding point 32' feeds power to the plurality of radiating elements that constitute the second transmission antenna 12'. In the first transmission antenna 13', the lower end of the seven radiating elements connected in series on the upper side, and the upper end of the seven radiating elements connected in series on the lower side, are each electrically connected to a feeding point 33'. The feeding point 33' feeds power to the plurality of radiating elements that constitute the third transmission antenna 13'. In each of the first transmission antenna 11', the second transmission antenna 12', and the third transmission antenna 13', the seven radiating elements connected in series on the upper side, and the seven radiating elements connected in series on the lower side, may be arranged in almost the same straight line as illustrated in FIG. 24. As described above, the first transmission antenna 11', the second transmission antenna 12', and the third transmission antenna 13' may form an array antenna configuration.

Each of the feeding point 31', the feeding point 32', and the feeding point 33' feeds power from the back-side surface of the substrate 10' illustrated in FIG. 25 to the front-side surface of the substrate 10' illustrated in FIG. 24. Therefore, each of the feeding point 31', the feeding point 32', and the feeding point 33' may include a conductor, etc. penetrating through the substrate 10' in a thickness direction. The feeding point 31', the feeding point 32', and the feeding point 33' feed power from the back-surface side of the substrate 10' to the first transmission antenna 11', the second transmission antenna 12', and the first transmission antenna 13' arranged on the front surface of the substrate 10' respectively.

As illustrated in FIG. 24, the reception antenna 20' includes a reception antenna 20A', a reception antenna 20B', a reception antenna 20C', and a reception antenna 20D'. As illustrated in FIG. 24, each of the reception antenna 20A', the reception antenna 20B', the reception antenna 20C', and the reception antenna 20D' includes a plurality of radiating elements. Each of these radiating elements may be made of a metal material such as copper. In the example illustrated in FIG. 24, each of the reception antenna 20A', the reception antenna 20B', the reception antenna 20C', and the reception antenna 20D' includes four radiating elements in total, two of which on the upper side and two of which on the lower side. In each of the reception antenna 20A', the reception antenna 20B', the reception antenna 20C', and the reception antenna 20D', the two radiating elements on the upper side are electrically connected in series in the vertical direction, and the two radiating elements on the lower side are also electrically connected in series in the vertical direction.

As illustrated in FIG. 24, in the reception antenna 20A', the lower end of the two radiating elements connected in series on the upper side, and the upper end of the two radiating elements connected in series on the lower side, are each electrically connected to a feeding point 40A'. The feeding point 40A' feeds power to the plurality of radiating elements that constitute the reception antenna 20A'. In the reception antenna 20B', the lower end of the two radiating elements connected in series on the upper side, and the upper end of the two radiating elements connected in series on the lower side, are each electrically connected to a feeding point 40B'. The feeding point 40B' feeds power to the plurality of radiating elements that constitute the reception antenna 20B'. In the reception antenna 20C', the lower end of the two radiating elements connected in series on the upper side, and the upper end of the two radiating elements connected in series on the lower side, are each electrically connected to a feeding point 40C'. The feeding point 40C' feeds power to the plurality of radiating elements that constitute the reception antenna 20C'. In the reception antenna 20D', the lower end of the two radiating elements connected in series on the upper side, and the upper end of the two radiating elements connected in series on the lower side, are each electrically connected to a feeding point 40D'. The feeding point 40D' feeds power to the plurality of radiating elements that constitute the reception antenna 20D'. In each of the reception antenna 20A', the reception antenna 20B', the reception antenna 20C', and the reception antenna 20D', the two radiating elements connected in series on the upper side, and the two radiating elements connected in series on the lower side, may be arranged in almost the same straight line as illustrated in FIG. 24. As described above, the reception antenna 20A', the reception antenna 20B', the reception antenna 20C', and the reception antenna 20D' may form an array antenna configuration.

Each of the feeding point 40A', the feeding point 40B', the feeding point 40C', and the feeding point 40D' feeds power from the back-side surface of the substrate 10' illustrated in FIG. 25 to the front-side surface of the substrate 10' illustrated in FIG. 24. Therefore, each of the feeding point 40A', the feeding point 40B', the feeding point 40C', and the feeding point 40D' may include a conductor, etc. penetrating through the substrate 10' in the thickness direction. The feeding point 40A', the feeding point 40B', the feeding point 40C', and the feeding point 40D' feed power from the back-side surface of the substrate 10' to the reception antenna 20A', the reception antenna 20B', the reception antenna 20C', and the reception antenna 20D' arranged on the front surface of the substrate 10' respectively.

In each of the first transmission antenna 11', the second transmission antenna 12', and the third transmission antenna 13', the respective wiring lines connecting the seven radiating elements on the upper side (wiring line connecting adjacent radiating elements to each other in series) may be of equal length. In each of the first transmission antenna 11', the second transmission antenna 12', and the third transmission antenna 13', the respective wiring lines connecting the seven radiating elements on the lower side may also be of equal length. The length of each of these wiring lines (wiring line connecting adjacent radiating elements to each other) may be equal to, for example, a wavelength λ of each transmission wave transmitted from the first transmission antenna 11', the second transmission antenna 12', and the third transmission antenna 13'. By making the length of the wiring line connecting adjacent radiating elements to each other equal to the wavelength λ of the transmission wave, the transmission waves transmitted from the first transmission antenna 11', the second transmission antenna 12', and the third transmission antenna 13' can be put in phase. Though the length of the wiring line may be equal to the wavelength λ, in a case of a transmission line, this length is multiplied by a wavelength shortening factor 1/√εr=(εr)^(-0.5), which is determined depending on the relative dielectric constant of a dielectric that is a constituent of the substrate. That is, the wavelength of a transmission wave on a transmission line may be shorter than a wavelength λ₀ in a vacuum. In the present disclosure, λ₀ is defined as the wavelength of an electromagnetic wave in a vacuum, and λ is defined as its wavelength in a medium with a relative dielectric constant εr. Given these definitions, λ=λ₀(εr)^(-0.5) holds true.

In each of the reception antenna 20A', the reception antenna 20B', the reception antenna 20C', and the reception antenna 20D', the respective wiring lines connecting the two radiating elements on the upper side (wiring line connecting adjacent radiating elements to each other in series) may be of equal length. In each of the reception antenna 20A', the reception antenna 20B', the reception antenna 20C', and the reception antenna 20D', the respective wiring lines connecting the two radiating elements on the lower side (wiring line connecting adjacent radiating elements to each other in series) may be of equal length. The length of each of these wiring lines (wiring line connecting adjacent radiating elements to each other) may be equal to, for example, the wavelength λ of the transmission wave. By making the length of the wiring line connecting adjacent radiating elements to each other equal to the wavelength λ of the transmission wave, reflected waves received via the reception antenna 20A', the reception antenna 20B', the reception antenna 20C', and the reception antenna 20D' can be put in phase. Though the length of the wiring line may be equal to the wavelength λ₀, in a case of a transmission line, this length is multiplied by a wavelength shortening factor (εr)^(-0.5), which is determined depending on the relative dielectric constant of a dielectric that is a constituent of the substrate. That is, the wavelength of a reception wave on a transmission line may be shorter than the wavelength λ₀ in a vacuum.

The length of each of the wiring lines connecting the feeding point 31', the feeding point 32', and the feeding point 33' to the radiating elements located above and beneath these feeding points respectively may be equal to, for example, the wavelength λ of the transmission wave. With this configuration, the transmission waves transmitted from the first transmission antenna 11', the second transmission antenna 12', and the third transmission antenna 13' can be put in phase. The length of each of the wiring lines connecting the feeding point 40A', the feeding point 40B', the feeding point 40C', and the feeding point 40D' to the radiating elements located above and beneath these feeding points respectively may be equal to, for example, the wavelength λ of the transmission wave.

As illustrated in FIG. 25, the electronic device 100 includes a controller 50' on the back surface of the substrate 10'. The electronic device 100 includes the feeding point 31', the feeding point 32', the feeding point 33', the feeding point 40A', the feeding point 40B', the feeding point 40C', and the feeding point 40D' on the back surface of the substrate 10'.

The controller 50' is capable of controlling overall operation of the electronic device 100, including control on each functional unit of the electronic device 100. The controller 50' may include at least one processor such as a CPU (central processing unit) or a DSP (digital signal processor) in order to provide controlling and processing capabilities for executing various functions. The controller 50' may be embodied in the form of a single processor collectively, several processors, or each individual processor. The processor may be embodied as a single integrated circuit. An integrated circuit may be abbreviated as an IC. The processor may be embodied as a plurality of integrated circuits and discrete circuits connected communicably. The processor may be embodied based on various kinds of other known technologies. In an embodiment, the controller 50' may be configured as, for example, a CPU and a program run by the CPU. The controller 50' may be configured as any SoC (system on a chip) or the like. The controller 50' may include any memory as appropriate. In an embodiment, any memory may store various parameters for defining a transmission wave transmitted from at least any of the first transmission antenna 11', the second transmission antenna 12', and the third transmission antenna 13'.

The feeding points 40A' to 40D' and the feeding points 3 1' to 33' illustrated in FIG. 25 correspond to the feeding points 40A' to 40D' and the feeding points 31' to 33' illustrated in FIG. 24 respectively. The feeding points 40A' to 40D' and the feeding points 31' to 33' illustrated in FIG. 25 are electrically connected to the feeding points 40A' to 40D' and the feeding points 31' to 33' illustrated in FIG. 24 respectively. Each of these corresponding pairs of feeding points may be electrically connected to each other by means of, for example, a conductor, etc. via, for example, a through hole borne through the substrate 10'.

As illustrated in FIG. 25, the feeding point 31' may be electrically connected to a transmission port 61' via a wiring line. The feeding point 32' may be electrically connected to a transmission port 62' via a wiring line. The feeding point 33' may be electrically connected to a transmission port 63' via a wiring line. Each of the transmission port 61', the transmission port 62', and the transmission port 63' may be a transmission RF (radio frequency) port of the controller 50'. The wiring line connecting the feeding point 3 1' to the transmission port 61', the wiring line connecting the feeding point 32' to the transmission port 62', and the wiring line connecting the feeding point 33' to the transmission port 63' may be of equal length. With this configuration, transmission signals supplied to the feeding point 31', the feeding point 32', and the feeding point 33' can be put in phase by simultaneously outputting transmission waves having the same phase from the transmission port 61', the transmission port 62', and the transmission port 63' of the controller 50'.

As illustrated in FIG. 25, the feeding point 40A' may be electrically connected to a reception port 70A' via a wiring line. The feeding point 40B' may be electrically connected to a reception port 70B' via a wiring line. The feeding point 40C' may be electrically connected to a reception port 70C' via a wiring line. The feeding point 40D' may be electrically connected to a reception port 70D' via a wiring line. Each of the reception port 70A', the reception port 70B', the reception port 70C', and the reception port 70D' may be a reception RF port of the controller 50'. The wiring line connecting the feeding point 40A' to the reception port 70A', the wiring line connecting the feeding point 40B' to the reception port 70B', the wiring line connecting the feeding point 40C' to the reception port 70C', and the wiring line connecting the feeding point 40D' to the transmission port 70D' may be of equal length. With this configuration, reception signals supplied to the reception ports 70A' to 70D' of the controller 50' from the feeding points 40A' to 40D' respectively with the same phase simultaneously can be put in phase.

Adopting the above-described design, according to which all of the wiring lines connecting the mutually adjacent radiating elements, and the wiring lines connecting the radiating elements to the feeding points, are of equal length, may be for a case where transmission waves are transmitted simultaneously (at the same timing). For example, in a case where transmission waves are not transmitted simultaneously (at the same timing), the wiring lines connecting the mutually adjacent radiating elements, and/or the wiring lines connecting the radiating elements to the feeding points, do not have to be of equal length.

The first transmission antenna 11', the second transmission antenna 12', and the third transmission antenna 13' of the electronic device 100 may transmit a radio wave in a frequency band of millimeter wave (equal to or greater than 30 GHz) or quasi-millimeter wave (for example, around 20 GHz to 30 GHz). For example, the first transmission antenna 11', the second transmission antenna 12', and the third transmission antenna 13' of the electronic device 100 may transmit a radio wave having a frequency bandwidth of 4 GHz such as from 77 GHz to 81 GHz. In the electronic device 100, transmission signals for transmitting such transmission waves may be generated by the controller 50', for example.

When a distance or the like is measured by using a millimeter-wave radar, a frequency modulated continuous wave radar (hereinafter abbreviated as FMCW radar) is often used. In FMCW radar, a transmission signal is generated by sweeping the frequency of a radio wave to be transmitted. Therefore, for example, in a millimeter-wave FMCW radar using a radio wave in the 79-GHz frequency band, the radio wave used has a frequency bandwidth of 4 GHz such as from 77 GHz to 81 GHz. The radar in the frequency band of 79 GHz has a feature of a wider usable frequency bandwidth, as compared with other millimeter-wave/quasi-millimeter-wave radars in frequency bands of, for example, 24 GHz, 60 GHz, 76 GHz, and the like.

With the above-described configuration, the first transmission antenna 11', the second transmission antenna 12', and the third transmission antenna 13' of the electronic device 100 are capable of transmitting electromagnetic waves (transmission waves) for detecting an object. The reception antenna 20A', the reception antenna 20B', the reception antenna 20C', and the reception antenna 20D' of the electronic device 100 are capable of receiving reflected waves coming back from an object by which transmission waves are reflected.

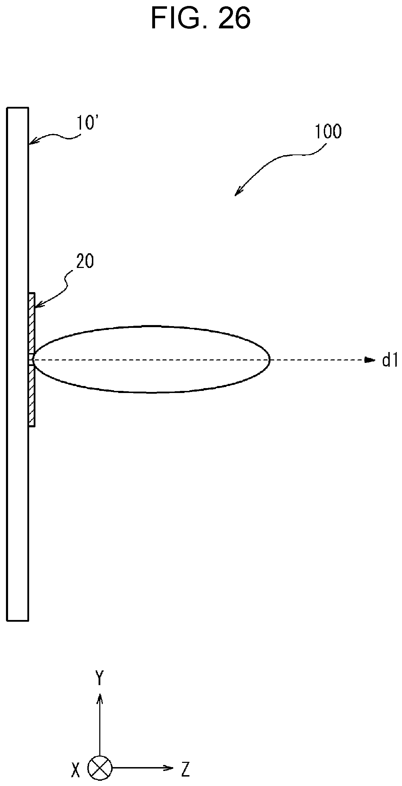

A case where a transmission wave is transmitted from only any one of the first transmission antenna 11', the second transmission antenna 12', and the third transmission antenna 13' will now be considered. For example, a case where the controller 50' performs control to transmit a transmission wave from the first transmission antenna 11' only will now be described. As described earlier, the length of a feeding path from each of the plurality of radiating elements that constitute the first transmission antenna 11' to the feeding point 31' is an integral multiple of the wavelength λ of the transmission wave. Therefore, as described earlier, the transmission waves transmitted respectively from the plurality of radiating elements that constitute the first transmission antenna 11' are in phase. For this reason, the first transmission antenna 11' as a whole has a directivity in the positive Z-axis direction illustrated in FIG. 24, that is, in the frontward direction of the electronic device 100 (the substrate 10'), and forms a transmission wave beam. FIG. 26 is a diagram for explaining the antenna directivity of the electronic device 100. As illustrated in FIG. 26, the first transmission antenna 11' as a whole has a directivity in the positive Z-axis direction illustrated in FIG. 26, that is, in a direction d1, and forms a transmission wave beam illustrated in FIG. 26.

The same applies to a case where, for example, the controller 50' performs control to transmit a transmission wave from either the second transmission antenna 12' only or the third transmission antenna 13' only. For this reason, the second transmission antenna 12' or the third transmission antenna 13' as a whole has a directivity in the positive Z-axis direction illustrated in FIG. 24, that is, in the frontward direction of the electronic device 100 (the substrate 10'), and forms a transmission wave beam. As illustrated in FIG. 26, the second transmission antenna 12' or the third transmission antenna 13' as a whole has a directivity in the positive Z-axis direction illustrated in FIG. 26, that is, in the direction d1, and forms a transmission wave beam illustrated in FIG. 26.

A case where transmission waves are transmitted from all of the first transmission antenna 11', the second transmission antenna 12', and the third transmission antenna 13' will now be considered. As described above, the first transmission antenna 11', the second transmission antenna 12', and the third transmission antenna 13' are connected in phase with respect to one another. Therefore, the transmission wave transmitted from the first transmission antenna 11', the transmission wave transmitted from the second transmission antenna 12', and the transmission wave transmitted from the third transmission antenna 13' are synthesized in phase. All of the first to third transmission antennas 11' to 13' have a directivity in the positive Z-axis direction, that is, in the frontward direction. For this reason, the synthesis (synthesized wave) of the transmission waves transmitted from all of the first transmission antenna 11', the second transmission antenna 12', and the third transmission antenna 13' has a directivity in the positive Z-axis direction, that is, in the frontward direction, and forms a synthesized wave beam in the positive Z-axis direction, that is, in the frontward direction (see FIG. 26).

As described above, the main lobe of the synthesized wave transmitted from the first transmission antenna 11', the second transmission antenna 12', and the third transmission antenna 13' is oriented in the positive Z-axis direction, that is, in the frontward direction (the direction of 0° both in X and Y) with respect to the surface of the substrate 10'. The synthesized wave transmitted from the first transmission antenna 11', the second transmission antenna 12', and the third transmission antenna 13' has a greater gain than a transmission wave transmitted from only any one of them. Therefore, the synthesized wave transmitted from the first transmission antenna 11', the second transmission antenna 12', and the third transmission antenna 13' can make a detection distance longer than the transmission wave transmitted from only any one of them. On the other hand, the larger the number of radiating elements is, the sharper (the narrower) the directivity of the transmission waves transmitted from the first transmission antenna 11', the second transmission antenna 12', and/or the third transmission antenna 13' in the frontward direction (the direction of 0° both in X and Y) is, as will be described later. Therefore, the directivity of the transmission waves transmitted from the fourteen radiating elements of the first transmission antenna 11', the second transmission antenna 12', or the third transmission antenna 13' respectively is relatively sharp (narrow). Though the directivity of the transmission antennas has been described here, the directivity of the reception antennas has the same characteristics as, or similar to, the characteristics of the directivity of the transmission antenna.

To detect an object located relatively far by using a millimeter-wave radar technology or the like, an antenna having a high gain is required. In such cases, the directivity can be oriented in a desired direction by disposing a plurality of antenna elements according to the required gain and performing synthesis in phase. In this case, the higher the gain of the antenna is designed to be, the greater the number of elements required is, and the narrower the directivity is.

In certain particular use cases, the electronic device 100 described above is useful. On the other hand, in some use cases that can also be anticipated, functions difficult to be realized by the electronic device 100 are demanded. For example, functions that are switchable as appropriate depending on several use cases are sometimes demanded, as in the case of the above-described radar apparatus installed in/on a roadside unit or a traffic light, or near the roadside unit or the traffic light, and configured to detect an automobile or the like traveling along a road. Also anticipated are use cases in which an automobile traveling along a road, a pedestrian, and the like are detected by an apparatus installed at a relatively high position, for example, in/on a roadside unit or a traffic light, or near the roadside unit or the traffic light. In these use cases, a function of detecting an automobile or the like located at a relatively short distance below the apparatus is sometimes demanded. In the use cases mentioned above, detection of an automobile or the like located at a relatively long distance from the apparatus could also be demanded.

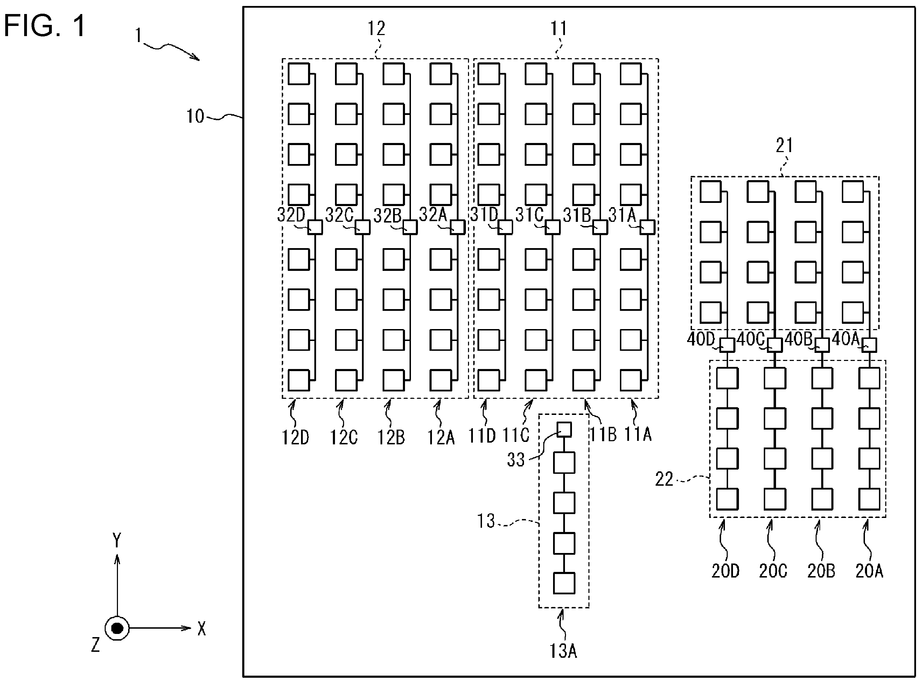

Despite being expected to meet these demands, the electronic device 100 is not capable of changing the orientation of its directivity. For this reason, the electronic device 100 orienting its directivity in the horizontal direction to a location that is relatively far from the electronic device 100 is not capable of performing a switchover to orienting its directivity downward to a location that is relatively near the electronic device 100. Changing the directivity of a transmission wave by controlling the phase of the transmission wave transmitted from each radiating element by the controller 50' is also conceivable (beamforming). However, even if such beamforming is performed, the directivity of transmission waves transmitted from a relatively large number of radiating elements such as those of the first transmission antenna 11', the second transmission antenna 12', or the third transmission antenna 13' will be relatively sharp (narrow). Even with the transmission wave of the first transmission antenna 11', the second transmission antenna 12', or the third transmission antenna 13' having been subjected to beamforming, desired detection accuracy might not be achieved due to the existence of null points, etc. As described above, in order for a millimeter-wave radar installed at a relatively high position, such as in/on a roadside unit or a traffic light, etc., to detect a short-range object, a high downward antenna gain is required. However, since the directivity of antennas synthesized in phase is relatively narrow, the gain might be insufficient for object detection. In the electronic device 100 illustrated in FIG. 24, the radiating elements are arranged in the vertical direction only. For this reason, in the electronic device 100, the directivity in the horizontal direction per antenna is relatively wide (half bandwidth 40 to 50°). Therefore, according to the electronic device 100 illustrated in FIG. 24, a reasonably acceptable steering angle can be obtained, even by performing beamforming using three antennas. By contrast, in an electronic device 1 illustrated in FIG. 1, which will be described below, radiating elements are arranged in the horizontal direction, too. For this reason, in the electronic device 1 illustrated in FIG. 1, the steering angle is relatively narrow, even with beamforming.

In view of this, in an electronic device according to an embodiment, directivity wideness/narrowness, in addition to the beam direction of transmission waves or reception waves, is made switchable, thereby enhancing convenience in particular modes of use. Such an electronic device will be further described below.

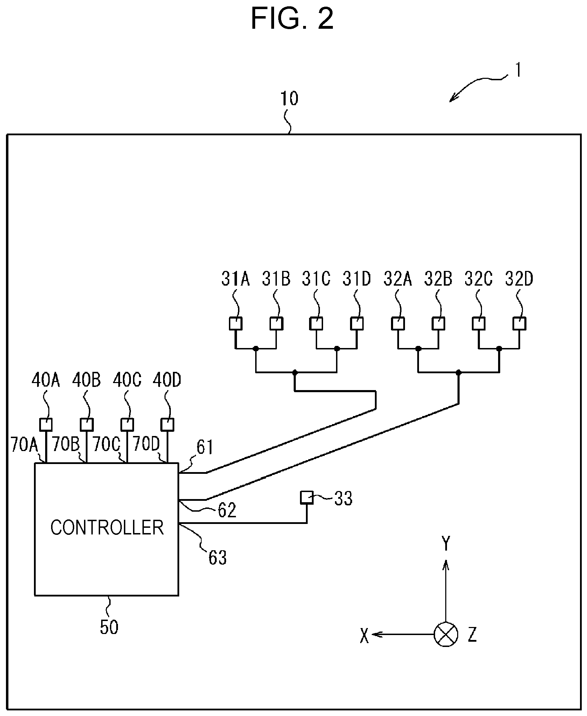

FIGs. 1 and 2 are diagrams illustrating a configuration of an electronic device according to an embodiment. FIG. 1 illustrates an electronic device according to an embodiment viewed in a predetermined direction. The predetermined direction in FIG. 1 may be the same as the predetermined direction having been mentioned with reference to FIG. 24. FIG. 2 illustrates an electronic device according to an embodiment viewed in a direction that is the opposite of the predetermined direction in FIG. 1.

In FIGS. 1 and 2, the direction of an X axis may be defined as a horizontal direction or a left-right direction. In FIGS. 1 and 2, the direction of a Y axis may be defined as a vertical direction or an up-down direction. More particularly, in FIGS. 1 and 2, a positive Y-axis direction may be defined as an up direction, and a negative Y-axis direction may be defined as a down direction. In FIGS. 1 and 2, the direction of a Z axis may be defined as a front-rear direction. More particularly, in FIGS. 1 and 2, a positive Z-axis direction may be defined as a forward direction or a frontward (front) direction, and a negative Z-axis direction may be defined as a backward direction or a rearward direction.

As illustrated in FIGS. 1 and 2, the electronic device 1 according to an embodiment may include a substrate 10. The substrate 10 may be a circuit board used for ordinary electrical circuits or electronic circuits. The surface of the substrate 10 illustrated in FIG. 1 (i.e., the surface of the substrate 10 on the positive Z-axis side) will be referred to also as a front-side surface or a front surface, for convenience sake. The surface of the substrate 10 illustrated in FIG. 2 (i.e., the surface of the substrate 10 on the negative Z-axis side) will be referred to also as a back-side surface or a back surface, for convenience sake. FIGS. 1 and 2 illustrate functional units of a transmission system and a reception system of the electronic device 1.

As illustrated in FIG. 1, the electronic device 1 includes a first transmission antenna 11, a second transmission antenna 12, and a third transmission antenna 13 on the front surface of the substrate 10. As illustrated in FIG. 1, the electronic device 1 includes a first reception antenna 21 and a second reception antenna 22 on the front surface of the substrate 10. The first transmission antenna 11, the second transmission antenna 12, the third transmission antenna 13, the first reception antenna 21, and the second reception antenna 22 may be planar antennas (patch antennas) commonly used in millimeter-wave radar.

As illustrated in FIG. 1, the first transmission antenna 11 may be configured as a right-side transmission patch antenna of the electronic device 1 in FIG. 1, and the second transmission antenna 12 may be configured as a left-side transmission patch antenna of the electronic device 1 in FIG. 1. As illustrated in FIG. 1, the first transmission antenna 11 and the second transmission antenna 12 may be arranged side by side on the upper side with respect to the center of the substrate 10. The third transmission antenna 12 may be located at a position that is relatively on the first transmission antenna 11 side with respect to the center in the left-right direction between the first transmission antenna 11 and the second transmission antenna 12, on the lower side of the substrate 10.

As illustrated in FIG. 1, the first transmission antenna 11 may include a transmission antenna 11A, a transmission antenna 11B, a transmission antenna 11C, and a transmission antenna 11D. The second transmission antenna 12 may include a transmission antenna 12A, a transmission antenna 12B, a transmission antenna 12C, and a transmission antenna 12D. The third transmission antenna 13 may include a transmission antenna 13A. As illustrated in FIG. 1, each of the first transmission antenna 11, the second transmission antenna 12, and the third transmission antenna 13 may include a plurality of radiating elements. Each of these radiating elements may be made of a metal material such as copper.

In the example illustrated in FIG. 1, each of the first transmission antennas 11A to 11D and the second transmission antennas 12A to 12D includes eight radiating elements in total, four of which on the upper side and four of which on the lower side. As illustrated in FIG. 1, in the first transmission antennas 11A to 11D and the second transmission antennas 12A to 12D, each of the radiating elements that constitute them may be power-fed in the horizontal direction. In each of the first transmission antennas 11A to 11D and the second transmission antennas 12A to 12D, the four radiating elements on the upper side are arranged in the vertical direction and are electrically connected in such a way as to be power-fed in the horizontal direction. In each of the first transmission antennas 11A to 11D and the second transmission antennas 12A to 12D, the four radiating elements on the lower side are also arranged in the vertical direction and are electrically connected in such a way as to be power-fed in the horizontal direction.

The third transmission antenna 13 includes four radiating elements. As illustrated in FIG. 1, in the third transmission antenna 13, each of the radiating elements that constitute it may be power-fed in the vertical direction. In the third transmission antenna 13, the four radiating elements are arranged in the vertical direction and are electrically connected in such a way as to be power-fed in the vertical direction.

As illustrated in FIG. 1, in the first transmission antennas 11A to 11D, the lower end of the four radiating elements connected on the upper side, and the upper end of the four radiating elements connected on the lower side, are electrically connected to feeding points 31A to 31D respectively. The feeding points 31A to 31D feed power to the plurality of radiating elements that constitute the first transmission antennas 11A to 11D respectively. In the second transmission antennas 12A to 12D, the lower end of the four radiating elements connected on the upper side, and the upper end of the four radiating elements connected on the lower side, are electrically connected to feeding points 32A to 32D respectively. The feeding points 32A to 32D feed power to the plurality of radiating elements that constitute the second transmission antennas 12A to 12D respectively. In the third transmission antenna 13 (the third transmission antenna 13A), the upper end of the four radiating elements connected in series is electrically connected to a feeding point 33. The feeding point 33 feeds power to the plurality of radiating elements that constitute the third transmission antenna 13 (the third transmission antenna 13A).

In the first transmission antenna 11 and the second transmission antenna 12, the four radiating elements connected on the upper side and the four radiating elements connected on the lower side may be arranged in the vertical direction and be power-fed in the horizontal direction as illustrated in FIG. 1. In the third transmission antenna 13, the four radiating elements connected in series may be arranged in the vertical direction and be power-fed in the vertical direction as illustrated in FIG. 1. As described above, the first transmission antenna 11, the second transmission antenna 12, and the third transmission antenna 13 may form an array antenna configuration.

Each of the feeding points 31A to 31D, the feeding points 32A to 32D, and the feeding point 33 feeds power from the back-side surface of the substrate 10 illustrated in FIG. 2 to the front-side surface of the substrate 10 illustrated in FIG. 1. Therefore, each of the feeding points 31A to 31D, the feeding points 32A to 32D, and the feeding point 33 may include a conductor, etc. penetrating through the substrate 10 in the thickness direction. The feeding points 31A to 31D feed power from the back-surface side of the substrate 10 to the first transmission antennas 11A to 11D arranged on the front surface of the substrate 10 respectively. The feeding points 32A to 32D feed power from the back-surface side of the substrate 10 to the second transmission antennas 12A to 12D arranged on the front surface of the substrate 10 respectively. The feeding point 33 feeds power from the back-surface side of the substrate 10 to the third transmission antenna 13 (the third transmission antenna 13A) arranged on the front surface of the substrate 10.

As illustrated in FIG. 1, the reception antenna of the electronic device 1 may include a reception antenna 20A, a reception antenna 20B, a reception antenna 20C, and a reception antenna 20D on the front surface of the substrate 10. As illustrated in FIG. 1, each of the reception antennas 20A to 20D may include a plurality of radiating elements. Each of these radiating elements may be made of a metal material such as copper.

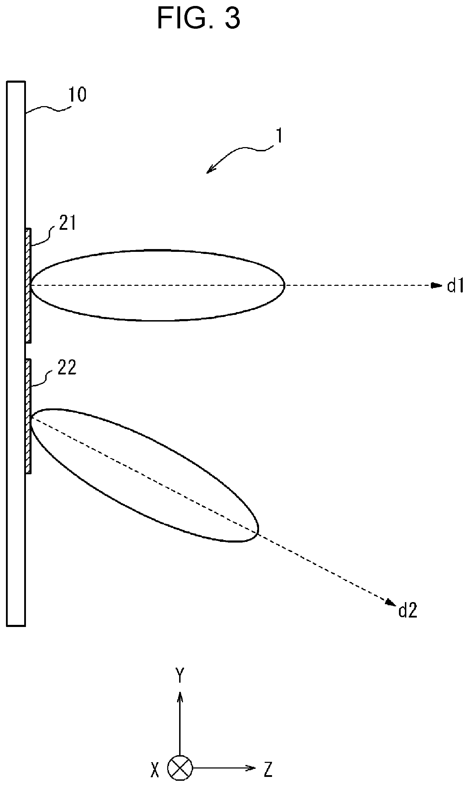

In the example illustrated in FIG. 1, each of the reception antennas 20A to 20D includes eight radiating elements in total, four of which on the upper side and four of which on the lower side. As illustrated in FIG. 1, the upper four of the radiating elements that constitute each of the reception antennas 20A to 20D may be power-fed in the horizontal direction respectively. The upper four of the radiating elements that constitute each of the reception antennas 20A to 20D may be arranged in the vertical direction and be electrically connected in such a way as to be power-fed in the horizontal direction. On the other hand, the lower four of the radiating elements that constitute each of the reception antennas 20A to 20D may be power-fed in the vertical direction respectively. The lower four of the radiating elements that constitute each of the reception antennas 20A to 20D may be arranged in the vertical direction and be electrically connected in such a way as to be power-fed in the vertical direction. Consequently, the electronic device 1 according to the present embodiment is capable of transmitting and/or receiving a horizontally polarized wave and a vertically polarized wave. With the electronic device 1 according to the present embodiment, by adopting the layout illustrated in FIG. 1, desired characteristics as designed can be obtained, such as suppression of interference between antenna elements, especially, suppression of interference in horizontal polarization and vertical polarization, suppression of a decrease in gain, and the like. In the structure of the electronic device 1 according to the present embodiment, arranging the antenna elements linearly above and below the feeding branch portion is important. As is clear from the description of directivities illustrated in FIG. 3, which will be given later, the electronic device 1 according to the present embodiment shows an example of transmitting a frontward beam and a downward beam. In the electronic device 1 according to the present embodiment, there is less optical path overlap, which may be considered as one of the reasons why desired characteristics as designed, such as suppression of a decrease in gain, can be obtained.

In the electronic device 1 according to the present embodiment, each of the radiating elements that constitute the transmission antenna 11 and the transmission antenna 12 may be power-fed in a first direction, and each of the radiating elements that constitute the transmission antenna 13 may be power-fed in a second direction different from the first direction. The first direction and the second direction may be perpendicular to each other, or may be directions that form a non-right angle. The first direction and the second direction may be parallel to the X axis or the Y axis illustrated in FIG. 1, or not parallel thereto. In the electronic device according to the present embodiment, each of the radiating elements that constitute the reception antenna 21 may be power-fed in a third direction, and each of the radiating elements that constitute the reception antenna 22 may be power-fed in a fourth direction different from the third direction. The third direction and the fourth direction may be perpendicular to each other, or may be directions that form a non-right angle. The third direction and the fourth direction may be parallel to the X axis or the Y axis illustrated in FIG. 1, or not parallel thereto. In the present disclosure, the direction in which a radiating element is power-fed may be the direction in which a feed line coupled to the radiating element is connected.

As illustrated in FIG. 1, in the reception antennas 20A to 20D, the lower end of the four radiating elements connected on the upper side, and the upper end of the four radiating elements connected on the lower side, are electrically connected to feeding points 40A to 40D respectively. The feeding points 40A to 40D feed power to the plurality of radiating elements that constitute the reception antennas 20A to 20D respectively.

In the reception antennas 20A to 20D, the four radiating elements connected on the upper side may be arranged in the vertical direction and be power-fed in the horizontal direction as illustrated in FIG. 1. As illustrated in FIG. 1, in the reception antennas 20A to 20D, the four radiating elements connected on the upper side may function as the first reception antenna 21. In the reception antennas 20A to 20D, the four radiating elements connected on the lower side may be arranged in the vertical direction and be power-fed in the vertical direction as illustrated in FIG. 1. As illustrated in FIG. 1, in the reception antennas 20A to 20D, the four radiating elements connected on the lower side may function as the second reception antenna 22. As described above, the reception antennas 20A to 20D, or the first reception antenna 21 and the second reception antenna 22, may form an array antenna configuration.

Each of the feeding points 40A to 40D feeds power from the back-side surface of the substrate 10 illustrated in FIG. 2 to the front-side surface of the substrate 10 illustrated in FIG. 1. Therefore, each of the feeding points 40A to 40D may include a conductor, etc. penetrating through the substrate 10 in the thickness direction. The feeding point 40A, the feeding point 40B, the feeding point 40C, and the feeding point 40D feed power from the back-side surface of the substrate 10 to the reception antenna 20A, the reception antenna 20B, the reception antenna 20C, and the reception antenna 20D arranged on the front surface of the substrate 10 respectively. In the present disclosure, the first reception antenna 21 and the second reception antenna 22 are capable of performing simultaneous reception in a horizontal directivity direction (d1 in FIG. 3) and in a downward directivity direction (d2 in FIG. 3) without a mechanism such as a selector switch.

In the first transmission antenna 11 and the second transmission antenna 12, the respective wiring lines connecting the four radiating elements on the upper side (wiring line connecting adjacent radiating elements to each other in series) may be of equal length. In the first transmission antenna 11 and the second transmission antenna 12, the respective wiring lines connecting the four radiating elements on the lower side may also be of equal length. In the third transmission antenna 13, the respective wiring lines connecting the four radiating elements may be longer than the respective wiring lines connecting the four radiating elements on the upper side in the first transmission antenna 11 and the second transmission antenna 12, and may also be of equal length. As described above, in the first transmission antenna 11 and the second transmission antenna 12, the length of each of the wiring lines (wiring line connecting adjacent radiating elements to each other) may be equal to, for example, the wavelength λ of each transmission wave transmitted from the first transmission antenna 11 and the second transmission antenna 12.

In the third transmission antenna 13, the length of each of the wiring lines (wiring line connecting adjacent radiating elements to each other) may be greater than the wavelength λ of the transmission wave transmitted from the third transmission antenna 13. By making the length of the wiring line connecting adjacent radiating elements to each other equal to the wavelength λ of the transmission wave, the transmission waves transmitted from the first transmission antenna 11 and the second transmission antenna 12 can be put in phase. In the third transmission antenna 13, by making the length of each of the wiring lines (wiring line connecting adjacent radiating elements to each other) greater than the wavelength λ of the transmission wave transmitted from the third transmission antenna 13, the directivity of the third transmission antenna 13 can be oriented downward. In the first transmission antenna 11 and the second transmission antenna 12, the length of each of the wiring lines connecting the four radiating elements on the upper side (wiring line connecting adjacent radiating elements to each other in series) does not necessarily have to be equal to, for example, the wavelength λ of each transmission wave transmitted from the first transmission antenna 11 and the second transmission antenna 12.

In the first transmission antenna 11, the second transmission antenna 12, and the third transmission antenna 13, each of the wiring lines connecting the radiating elements has a length of the wavelength λ including a wavelength shortening factor. That is, in the present disclosure, the wiring length may be the length of the wavelength λ. In the present disclosure, in a case of a transmission line, the wavelength of a signal on the transmission line may be multiplied by a wavelength shortening factor (εr)^(-0.5), which is determined depending on the relative dielectric constant of a dielectric that is a constituent of the substrate. That is, in the present disclosure, the wavelength of a signal on a transmission line may be shorter than a wavelength λ₀ in a vacuum. As described above, in the electronic device 1 according to the present disclosure, the directivity of a radio wave that is transmitted can be adjusted by adjusting the length of each of the wiring lines connecting the radiating elements in the first transmission antenna 11, the second transmission antenna 12, and the third transmission antenna 13.

In each of the reception antenna 20A, the reception antenna 20B, the reception antenna 20C, and the reception antenna 20D, the respective wiring lines connecting the four radiating elements on the upper side (wiring line connecting adjacent radiating elements to each other in series) may be of equal length. In each of the reception antenna 20A, the reception antenna 20B, the reception antenna 20C, and the reception antenna 20D, the respective wiring lines connecting the four radiating elements on the lower side (wiring line connecting adjacent radiating elements to each other in series) may be of equal length. In the present disclosure, the length of each of the wiring lines connecting the four radiating elements on the upper side mentioned above (wiring line connecting adjacent radiating elements to each other) may be equal to, for example, the wavelength λ of the transmission wave. In this case, the length of each of the wiring lines connecting the four radiating elements on the lower side mentioned above may be greater than, for example, the wavelength λ of the transmission wave. By configuring an equal length for each wiring line connecting adjacent radiating elements to each other, reflected waves received via the reception antenna 20A, the reception antenna 20B, the reception antenna 20C, and the reception antenna 20D can be put in phase. With this layout, reflected waves received via the first reception antenna 21 and the second reception antenna 22 can be put in phase.

In the present disclosure, the length of each of these wiring lines (wiring line connecting adjacent radiating elements to each other) may be equal to, for example, the wavelength λ of the transmission wave. By making the length of the wiring line connecting adjacent radiating elements to each other equal to the wavelength λ of the transmission wave, reflected waves received via the reception antenna 20A, the reception antenna 20B, the reception antenna 20C, and the reception antenna 20D can be put in phase. With this layout, reflected waves received via the first reception antenna 21 and the second reception antenna 22 can be put in phase.

In the present disclosure, in a case of a transmission line, the wavelength of a signal on the transmission line may be multiplied by a wavelength shortening factor (εr)^(-0.5), which is determined depending on the relative dielectric constant of a dielectric that is a constituent of the substrate. That is, in the present disclosure, the wavelength of a signal on a transmission line may be shorter than a wavelength λ₀ in a vacuum. As described above, in the electronic device 1 according to the present disclosure, the directivity of a reception radio wave can be adjusted by adjusting the length of each of the wiring lines connecting the radiating elements in the first reception antenna 21 and the second reception antenna 22. The electronic device 1 according to an embodiment (receiver) may include the first reception antenna 21 and the second reception antenna 22. The first reception antenna 21 has a directivity in the first direction d1. The second reception antenna 22 has a directivity in the second direction d2. The second direction d2 may be a direction different from the first direction d1. In the present disclosure, the first direction d1 may be a horizontal direction (a direction that is horizontal with respect to the Z axis), and the second direction d2 may be a downward direction (a direction that forms a predetermined angle θ with respect to the Z axis). In the present disclosure, the second direction d2 may be a horizontal direction (a direction that is horizontal with respect to the Z axis), and the first direction d1 may be a downward direction (a direction that forms a predetermined angle θ with respect to the Z axis). The first reception antenna 21 may be configured to maximize the gain of reception when a radio wave received by the first reception antenna 21 is polarized in a first polarization direction (polarized horizontally). The second reception antenna 22 may be configured to maximize the gain of reception when a radio wave received by the second reception antenna 22 is polarized in a second polarization direction (polarized vertically). The second polarization direction may be a direction different from the first polarization direction. In the present disclosure, the first reception antenna 21 may be configured such that the closer the polarization direction of a radio wave received by the first reception antenna 21 is to the first polarization direction, the greater the gain of reception becomes. The second reception antenna 22 may be configured such that the closer the polarization direction of a radio wave received by the second reception antenna 22 is to the second polarization direction different from the first polarization direction, the greater the gain of reception becomes. The second polarization direction may be a direction different from the first polarization direction. The first polarization direction and the second polarization direction may be perpendicular to each other, or not perpendicular to each other.

The length of each of the wiring lines connecting the feeding points 31A to 31D and the feeding points 32A to 32D to the radiating elements located above and beneath these feeding points respectively may be equal to, for example, the wavelength λ of the transmission wave. The length of the wiring line connecting the feeding point 33 to the radiating element located beneath this feeding point may be greater than, for example, the wavelength λ of the transmission wave. With this configuration, the transmission waves transmitted from the first transmission antenna 11 and the second transmission antenna 12 can be put in phase, and the directivity of the transmission wave transmitted from the third transmission antenna 13 can be oriented downward (the negative Y-axis direction), for example. The length of the wiring line connecting the feeding point 40A to 40D to the radiating element located above this feeding point may be equal to, for example, the wavelength λ of the transmission wave. In this case, the length of the wiring line connecting the feeding point 40A to 40D to the radiating element located beneath this feeding point may be greater than, for example, the wavelength λ of the transmission wave.

In the electronic device 1 according to the present disclosure, the length of the wiring line connecting the feeding point 40A to 40D to the radiating element located beneath this feeding point may be greater than, for example, the wavelength λ of the transmission wave. In this case, the length of the wiring line connecting the feeding point 40A to 40D to the radiating element located beneath this feeding point may be equal to, for example, the wavelength λ of the transmission wave. As described above, the length of the wiring line connecting the radiating element may be configured to be equal to the wavelength λ of the transmission wave, thereby imparting the directivity in the direction parallel to the Z axis. The length of the wiring line connecting the radiating element may be configured to be different from the wavelength λ of the transmission wave, thereby imparting the directivity in a direction not parallel to the Z axis. In the present disclosure, instead of configuring the length of the wiring line connecting the radiating element to be greater than the wavelength λ of the transmission wave or the reception wave, the length of the wiring line connecting the radiating element may be configured to be less than the wavelength λ of the transmission wave or the reception wave. The directivity of antennas disposed on the upper side with respect to a feeding point, such as the first reception antenna 21, goes upward when its element-to-element interval is made longer. The directivity of antennas disposed on the upper side with respect to a feeding point, such as the first reception antenna 21, goes downward when its element-to-element interval is made shorter. The directivity of antennas disposed on the lower side with respect to a feeding point, such as the third transmission antenna 13 and/or the second reception antenna 22, goes downward when its element-to-element interval is made longer. The directivity of antennas disposed on the lower side with respect to a feeding point, such as the third transmission antenna 13 and/or the second reception antenna 22, goes upward when its element-to-element interval is made shorter.

As illustrated in FIG. 2, the electronic device 1 includes a controller 50 on the back surface of the substrate 10. The electronic device 1 includes the feeding points 31A to 31D, the feeding points 32A to 32D, the feeding point 33, and the feeding points 40A to 40D on the back surface of the substrate 10.

The controller 50 is capable of controlling overall operation of the electronic device 1, including control on each functional unit of the electronic device 1. The controller 50 may include at least one processor such as a CPU (central processing unit) or a DSP (digital signal processor) in order to provide controlling and processing capabilities for executing various functions. The controller 50 may be embodied in the form of a single processor collectively, several processors, or each individual processor. The processor may be embodied as a single integrated circuit. An integrated circuit may be abbreviated as an IC. The processor may be embodied as a plurality of integrated circuits and discrete circuits connected communicably. The processor may be embodied based on various kinds of other known technologies. In an embodiment, the controller 50 may be configured as, for example, a CPU and a program run by the CPU. The controller 50 may be configured as any SoC (system on a chip) or the like. The controller 50 may include any memory as appropriate. In an embodiment, any memory may store various parameters for defining a transmission wave transmitted from at least any of the first transmission antenna 11, the second transmission antenna 12, and the third transmission antenna 13.

The feeding points 31A to 31D, the feeding points 32A to 32D, and the feeding point 33 illustrated in FIG. 2 correspond to the feeding points 31A to 31D, the feeding points 32A to 32D, and the feeding point 33 illustrated in FIG. 1 respectively. The feeding points 40A to 40D illustrated in FIG. 2 correspond to the feeding points 40A to 40D illustrated in FIG. 1 respectively. Each of these corresponding pairs of feeding points may be electrically connected to each other by means of, for example, a conductor, etc. via, for example, a through hole borne through the substrate 10.

As illustrated in FIG. 2, the feeding points 31A to 31D may be electrically connected to a transmission port 61 via a wiring line. The feeding points 32A to 32D may be electrically connected to a transmission port 62 via a wiring line. The feeding point 33 may be electrically connected to a transmission port 63 via a wiring line. Each of the transmission port 61, the transmission port 62, and the transmission port 63 may be a transmission RF (radio frequency) port of the controller 50. The wiring line connecting the feeding points 31A to 31D to the transmission port 61 and the wiring line connecting the feeding points 32A to 32D to the transmission port 62 may be of equal length. With this configuration, transmission signals supplied to the feeding point 31 and the feeding point 32 can be put in phase by simultaneously outputting transmission waves having the same phase from the transmission port 61 and the transmission port 62 of the controller 50.

As illustrated in FIG. 2, the feeding points 40A to 40D may be electrically connected to reception ports 70A to 70D via wiring lines respectively. Each of the reception ports 70A to 70D may be a reception RF port of the controller 50. The wiring lines connecting the feeding points 40A to 40D to the reception ports 70A to 70D respectively may be of equal length. With this configuration, reception signals supplied to the reception ports 70A to 70D of the controller 50 from the feeding points 40A to 40D respectively with the same phase simultaneously can be put in phase.

Adopting the above-described design, according to which all of the wiring lines connecting the mutually adjacent radiating elements, and the wiring lines connecting the radiating elements to the feeding points, are of equal length, may be for a case where transmission waves are transmitted simultaneously (at the same timing). For example, in a case where transmission waves are not transmitted simultaneously (at the same timing), the wiring lines connecting the mutually adjacent radiating elements, and/or the wiring lines connecting the radiating elements to the feeding points, do not have to be of equal length.

The first transmission antenna 11, the second transmission antenna 12, and the third transmission antenna 13 of the electronic device 1 may transmit a radio wave in a frequency band of millimeter wave (equal to or greater than 30 GHz) or quasi-millimeter wave (for example, around 20 GHz to 30 GHz). For example, the first transmission antenna 11, the second transmission antenna 12, and the third transmission antenna 13 of the electronic device 1 may transmit a radio wave having a frequency bandwidth of 4 GHz such as from 77 GHz to 81 GHz. In the electronic device 1, transmission signals for transmitting such transmission waves may be generated by the controller 50, for example.

With the above-described configuration, the first transmission antenna 11, the second transmission antenna 12, and the third transmission antenna 13 of the electronic device 1 are capable of transmitting electromagnetic waves (transmission waves) for detecting an object. The first reception antenna 21 and the second reception antenna 22 of the electronic device 1 are capable of receiving reflected waves coming back from an object by which transmission waves are reflected.

As illustrated in FIG. 2, in the electronic device 1, the controller 50 is mounted on the back surface of the substrate 10. The two transmission ports 61 and 62 of the controller 50 are wired to the feeding points 31A to 31D and the feeding points 32A to 32D respectively, with equal wiring length. Therefore, the first transmission antenna 11 and the second transmission antenna 12 are connected to the controller 50 respectively via paths of equal length. As illustrated in FIG. 2, the wiring line connected to the transmission port 61 and the wiring line connected to the transmission port 62 are each split into four to be connected to the feeding points 31A to 31D and the feeding points 32A to 32D on the front surface of the substrate 10. The four reception ports 70A to 70D of the controller 50 are wired to the feeding points 40A to 40D corresponding to them respectively, with equal wiring length. Therefore, the reception antenna 20A, the reception antenna 20B, the reception antenna 20C, and the reception antenna 20D are connected to the controller 50 respectively via paths of equal length.

In the electronic device 1, the number of radiating elements that constitute each of the transmission antenna and/or the reception antenna, and the number of the split lines from the transmission port and/or reception port of the controller 50 to the feeding points, may be various numbers, depending on system design. For example, in the electronic device 1 according to an embodiment, the number of radiating elements that constitute each of the transmission antenna and/or the reception antenna may be sixteen in one column, etc., instead of eight in one column. For example, in the electronic device 1 according to an embodiment, the wiring line connected from one transmission port of the controller 50 to the feeding points may be split into eight, etc., instead of being split into four. The electronic device 1 may include a branching circuit or the like configured to branch a signal from the feeding point of the first reception antenna 21 and the second reception antenna 22, as appropriate.

FIG. 3 is a diagram for explaining the directivities of the electronic device 1. The electronic device 1 illustrated in FIG. 3 is a side view of the electronic device 1 illustrated in FIGS. 1 and 2. In FIG. 3, the substrate 10, the first reception antenna 21, and the second reception antenna 22 only of the electronic device 1 are illustrated, and the illustration of other functional units is omitted.

As illustrated in FIG. 1, each of the radiating elements included in the first reception antenna 21 is power-fed from the right side with respect to said each radiating element. Therefore, the plane of polarization for the linearly polarized wave of the radiating elements included in the first reception antenna 21 is horizontal with respect to the ground (parallel to the X-axis), that is, horizontally polarized. The radiating elements included in the first reception antenna 21 are connected at such intervals that inputs are of the same phase. For this reason, the directivity of each of the radiating elements included in the first reception antenna 21 is oriented in the frontward direction (the positive Z-axis direction) with respect to the substrate 10, as indicated by the direction d1 illustrated in FIG. 3. FIG. 3 illustrates that the directivity of the first reception antenna 21 is oriented in the direction d1, and a beam is formed in this direction.

On the other hand, as illustrated in FIG. 1, each of the radiating elements included in the second reception antenna 22 is power-fed from the upper side with respect to said each radiating element. Therefore, the plane of polarization for the linearly polarized wave of the radiating elements included in the second reception antenna 22 is vertical with respect to the ground (perpendicular to the X-axis), that is, vertically polarized. The radiating elements included in the second reception antenna 22 are arranged at intervals with such a phase difference that the directivity contains a downward component (that is, obliquely downward). For this reason, the directivity of each of the radiating elements included in the second reception antenna 22 is oriented in an obliquely downward direction (a direction that contains a negative Y-axis direction component) with respect to the substrate 10, as indicated by the direction d2 illustrated in FIG. 3. FIG. 3 illustrates that the directivity of the second reception antenna 22 is oriented in the direction d2, and a beam is formed in this direction.

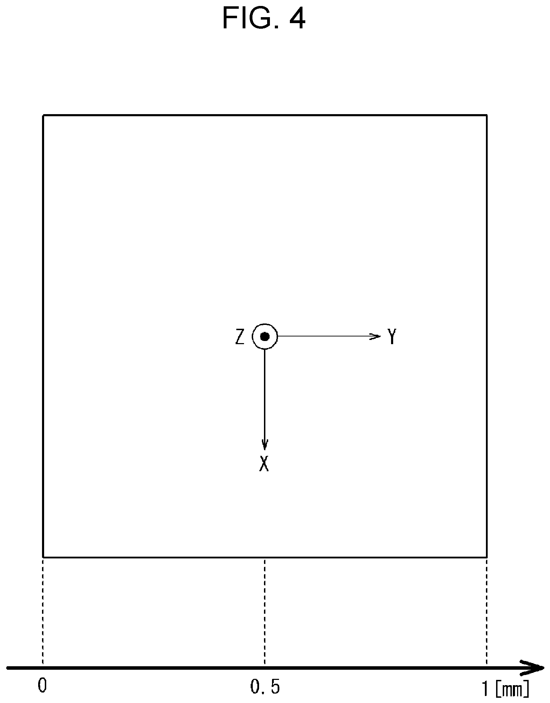

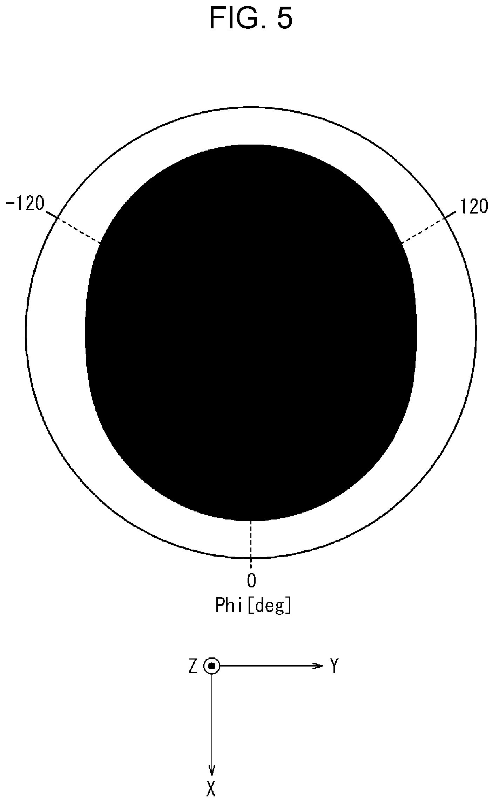

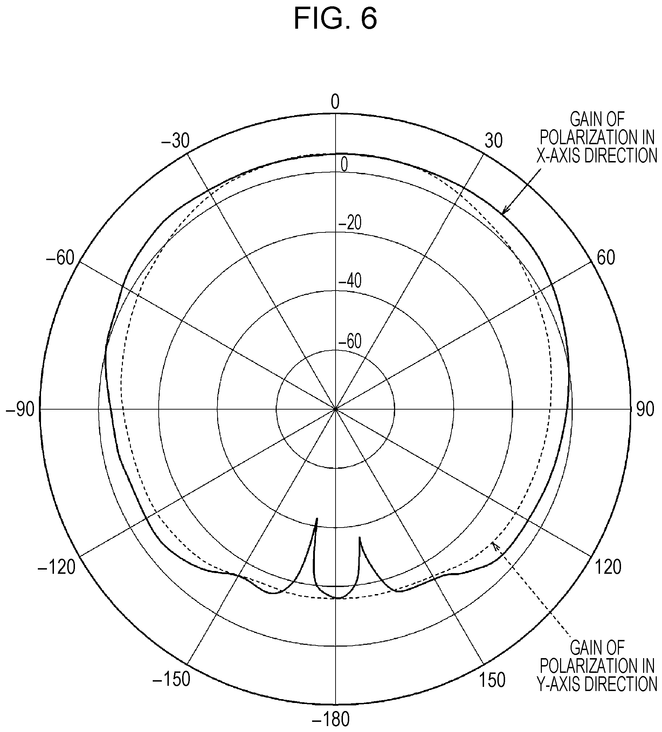

In radiating elements that constitute an array antenna, the directivity in the horizontal direction and the directivity in the vertical direction differ slightly, depending on the power-fed position of the radiating element. This is because the feeding of power disrupts the symmetry of an electromagnetic field. The electronic device 1 according to an embodiment produces an effect of making a radar area wider by applying the horizontal polarization to the first reception antenna and applying the vertical polarization to the second reception antenna. An explanation regarding this point will now be given with reference to FIGS. 4, 5, and 6. FIG. 4 is a top view of an antenna of the electronic device 1 according to the present embodiment. FIG. 5 is a top view of a three-dimensional polar coordinate plot of gains of the electronic device according to the present embodiment. FIG. 6 is a graph illustrating a plot of gains of the electronic device 1 according to the present embodiment.

In FIG. 4, the vertically-down direction that is parallel to the antenna plane is taken as the X-axis direction, the horizontal direction that is parallel to the antenna plane is taken as the Y-axis direction, and the direction that is perpendicular to the antenna plane and is the opposite of the direction in which a radio wave comes is taken as the Z-axis direction. In FIG. 4, the X-axis direction, the E plane (electric field plane), is a direction that indicates the gain of X-directional polarization. The Y-axis direction, the H plane (magnetic field plane), is a direction that indicates the gain of Y-directional polarization. As illustrated in FIGS. 5 and 6, in the embodiment of the present disclosure, as a 3D radiation pattern viewed in the Z-axis direction, the value of a gain at Phi 90° in the Y-axis direction is small relative to the value of a gain at Phi 0° in the X-axis direction. The graph of the gain of X-directional polarization in FIG. 6 corresponds to polarization in the vertical direction according to the present disclosure, and the graph of the gain of Y-directional polarization corresponds to polarization in the horizontal direction. Therefore, in the present disclosure, the gain of X-directional polarization (vertical direction) is wider in directivity than the gain of Y-directional polarization (horizontal direction). Therefore, in the present disclosure, by utilizing the fact that the directivity in the horizontal direction and the directivity in the vertical direction slightly differ depending on the power-fed position in elements of an array antenna, it is possible to perform adjustments of widening or narrowing the directivity in a desired direction. In FIG. 5, an angle θ denotes an angle formed with the Z axis, and an angle φ denotes an angle formed with the x axis on the xy plane.

As described above, the electronic device 1 according to an embodiment has orthogonality by shifting the plane of polarization of the first reception antenna 21 and the plane of polarization of the second reception antenna 22 by 90°. With this configuration, the electronic device 1 according to an embodiment can achieve a reduction in interference between antennas. In the electronic device 1 according to an embodiment, the first reception antenna 21 and the second reception antenna 22 may receive radio waves (signals) having different frequencies or signals having the same frequency. In the electronic device 1 according to the present disclosure, the plane of polarization of the first reception antenna 21 and the plane of polarization of the second reception antenna 22 may be shifted by any angle other than 90°.

Each of the radiating elements included in the first transmission antenna 11 and the second transmission antenna 12 is power-fed from the right side with respect to said each radiating element. Therefore, in the electronic device 1, the plane of polarization of the radiating elements included in the first transmission antenna 11 and the second transmission antenna 12 is designed to agree with the plane of polarization of the radiating elements included in the first reception antenna 21. Each of the radiating elements included in the third transmission antenna 13 is power-fed from the upper side with respect to said each radiating element. Therefore, in the electronic device 1, the plane of polarization of the radiating elements included in the third transmission antenna 13 is designed to agree with the plane of polarization of the radiating elements included in the second reception antenna 22.

Adopting the above-described design, according to which, in the first transmission antenna 11 and the second transmission antenna 12, all of the wiring lines connecting the mutually adjacent radiating elements, and the wiring lines connecting the radiating elements to the feeding points, are of equal length, may be for a case where transmission waves are transmitted simultaneously (at the same timing). For example, in a case where transmission waves are not transmitted simultaneously (at the same timing), in the first transmission antenna 11 and the second transmission antenna 12, the wiring lines connecting the mutually adjacent radiating elements, and/or the wiring lines connecting the radiating elements to the feeding points, do not have to be of equal length.

In the explanation given above, the polarization of each of the radiating elements included in the first reception antenna 21, the second transmission antenna 12, and the third transmission antenna 13 is assumed to be linear polarization. However, the polarization of each of the radiating elements included in the first reception antenna 21, the second transmission antenna 12, and the third transmission antenna 13 of the electronic device 1 according to an embodiment is not limited to linear polarization, and may be, for example, circular polarization, elliptical polarization, or the like. As described above, the polarization in the electronic device 1 according to an embodiment may be any of linear polarization, elliptical polarization, and circular polarization. For example, in the electronic device 1 according to an embodiment, at least one of the horizontal polarization or the vertical polarization may be any of linear polarization, elliptical polarization, and circular polarization.

In the electronic device 1 illustrated in FIG. 1, the third transmission antenna 13 is located below the first transmission antenna 11 and the second transmission antenna 12. With this layout, advantageous effects can be obtained when the electronic device 1 according to an embodiment is equipped with a redome 90 that will be described later. As described above, the third transmission antenna 13 is located at a position that is relatively on the first transmission antenna 11 side with respect to the center in the left-right direction between the first transmission antenna 11 and the second transmission antenna 12, on the lower side of the substrate 10. With this layout, a loss on the transmission line from the controller 50 can be reduced.

On the other hand, in a case where the electronic device 1 according to an embodiment is not equipped with the redome 90 that will be described later, for example, the third transmission antenna 13 may be arranged adjacent to the first transmission antenna 11 and the second transmission antenna 12 in the horizontal direction. In this case, the loss will be greater because there is a need to make the transmission line of the third transmission antenna 13 longer. On the other hand, this eliminates the need to dispose the third transmission antenna 13 below the first transmission antenna 11 and the second transmission antenna 12. Therefore, with this layout, the number of the radiating elements that constitute the first transmission antenna 11 and the second transmission antenna 12 (and the third transmission antenna 13) can be increased.

As described above, with the electronic device 1 according to an embodiment, the directivities of reception antennas can be oriented in, for example, a frontward direction and an obliquely downward direction without using a functional unit such as an RF switch. Therefore, the electronic device 1 according to an embodiment can enhance convenience in object detection technologies such as millimeter-wave radar.

Because of the configuration described above, the electronic device 1 is capable of receiving a reflected wave coming back from an object by which a transmission wave is reflected, by having the directivity in a downward direction (obliquely downward direction), for example. Because of the configuration described above, the electronic device 1 is capable of receiving a reflected wave coming back from an object by which a transmission wave is reflected, by having the directivity in a frontward direction (forward direction), for example.

The electronic device 1 according to an embodiment can support use cases as, for example, an apparatus that is installed in/on a roadside unit or a traffic light, or near the roadside unit or the traffic light, and detects an automobile traveling along a road, a pedestrian, and the like. That is, with the electronic device 1, a function of detecting an automobile or the like located at a relatively short distance below the device is realized. With the electronic device 1, a function of detecting an automobile or the like located at a relatively long distance from the device in a direction close to the horizontal direction of the device is also realized.

As described above, with the electronic device 1 according to an embodiment, the directivity direction can be changed. Therefore, the electronic device 1 according to an embodiment can enhance convenience in particular modes of use by making directivity wideness/narrowness switchable in addition to the beam direction of transmission waves or reception waves.

Examples of effects produced by the electronic device 1 according to an embodiment will now be further described.

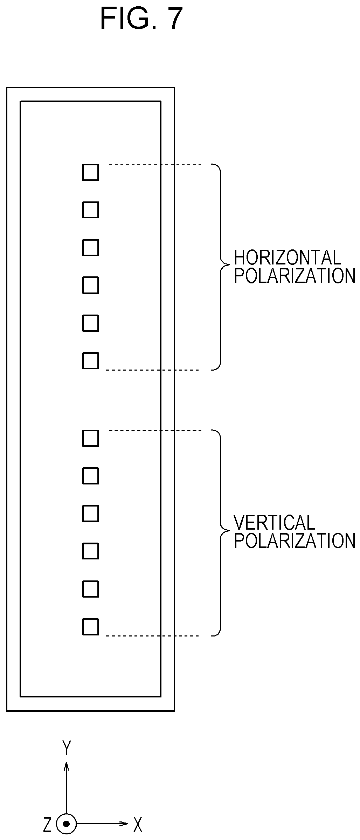

FIG. 7 is a diagram illustrating the effects of a configuration according to which radiating elements are arranged in the vertical direction in the reception antennas 20A to 20D. FIG. 7 illustrates a configuration according to which the number of radiating elements arranged in the vertical direction in the reception antenna is changed from that of the configuration illustrated in FIG. 1. A simulation result of operation performed by such a configuration will be described below.

In this simulation, a configuration according to which twelve radiating elements are arranged in the vertical direction, as illustrated in FIG. 7, was adopted. As illustrated in FIG. 7, the upper six of the twelve radiating elements arranged in the vertical direction were assumed to constitute an array antenna for horizontal polarization, and the lower six thereof were assumed to constitute an array antenna for vertical polarization. In this simulation, the radiating elements illustrated in FIG. 7 were matched to 79 GHz. In this simulation, a feeding point was provided for each radiating element, and the amplitude and phase of a transmission wave were configured to be changeable individually for each of them.

The six radiating elements on the upper side for horizontal polarization illustrated in FIG. 7 were synthesized in phase, with their main lobe oriented in the frontward direction (the positive Z-axis direction) from the surface of the substrate 10. A phase difference was given to the six radiating elements on the lower side for vertical polarization illustrated in FIG. 7, with their main lobe oriented in an obliquely downward direction (including a positive Z-axis direction component and a negative Y-axis direction component) with respect to the surface of the substrate 10.

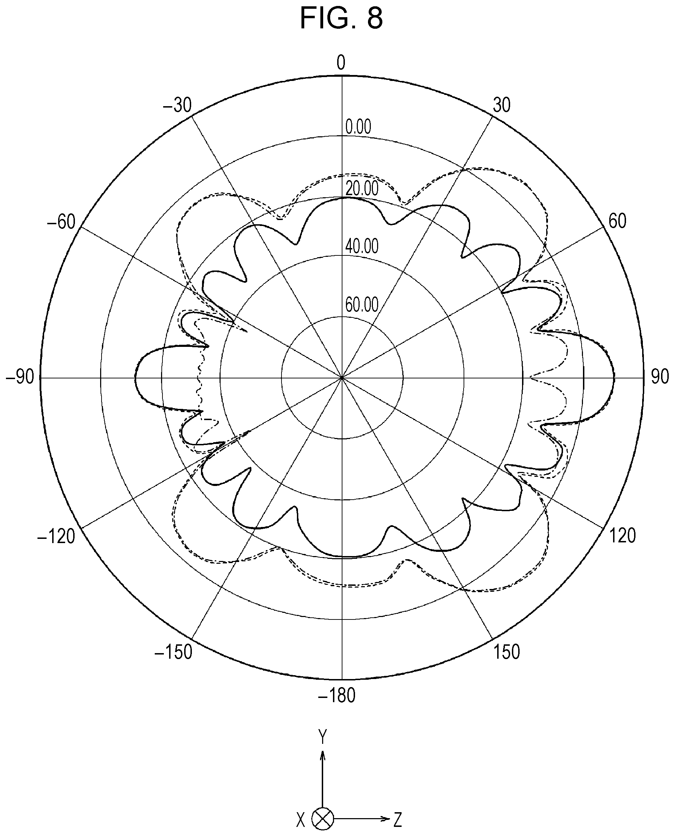

FIG. 8 is a diagram showing a graph plotting the gain of each polarization by the radiating elements illustrated in FIG. 7. FIG. 8 illustrates a relationship between the gain of polarizations by the radiating elements illustrated in FIG. 7 and angles on a plane parallel to the Y-Z plane. The radial direction of a pie chart illustrated in FIG. 8 represents the magnitude of the gain (dBi). The circumferential direction of the pie chart illustrated in FIG. 8 represents angles (°) on a plane parallel to the Y-Z plane. In the circumferential direction of the pie chart illustrated in FIG. 8, 90° denotes the positive Z-axis direction, that is, the frontward direction of the radiating elements illustrated in FIG. 7. In the circumferential direction of the pie chart illustrated in FIG. 8, 0° denotes the positive Y-axis direction, that is, the up direction of the radiating elements illustrated in FIG. 7. In the circumferential direction of the pie chart illustrated in FIG. 8, 180° (-180°) denotes the negative Y-axis direction, that is, the down direction of the radiating elements illustrated in FIG. 7.

Among the curves illustrated in FIG. 8, the solid-line curve represents the gain of the horizontal polarization by the six radiating elements on the upper side illustrated in FIG. 7. The dashed-dotted-line curve represents the gain of the vertical polarization by the six radiating elements on the lower side illustrated in FIG. 7. The broken-line curve represents the synthesized gain of the horizontal polarization by the six radiating elements on the upper side and the vertical polarization by the six radiating elements on the lower side illustrated in FIG. 7.

As illustrated in FIG. 8, the main lobe of the horizontal polarization shown by the solid-line illustration is oriented in the frontward direction (90°) (gain of 10.7 dBi). As illustrated in FIG. 8, the main lobe of the vertical polarization shown by the dashed-dotted-line illustration is oriented in an obliquely downward direction of 45° (135°) (gain of 9.8 dBi). As can be seen from FIG. 8, the angle at which the peak of the main lobe exists differ from polarization to polarization.

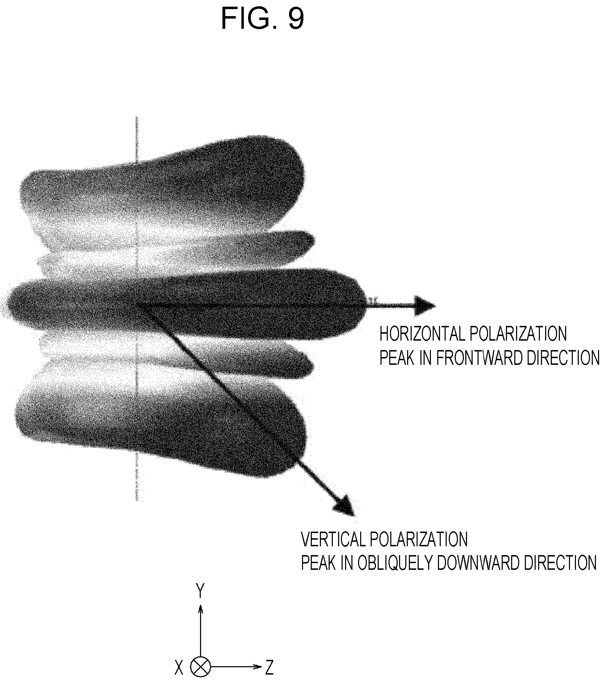

FIG. 9 is a diagram illustrating an example of 3D plotting of the gains illustrated in FIG. 8. In FIG. 9, an example of 3D plotting of the gain curve shown by the broken-line illustration in FIG. 8, that is, the synthesized gain of the horizontal polarization by the six radiating elements on the upper side and the vertical polarization by the six radiating elements on the lower side illustrated in FIG. 7, is illustrated. In FIG. 9, the greater the gray-scale density is, the greater the gain is. As can be seen from FIG. 9, the horizontal polarization has a peak in a frontward direction, and the vertical polarization has a peak in an obliquely downward direction.

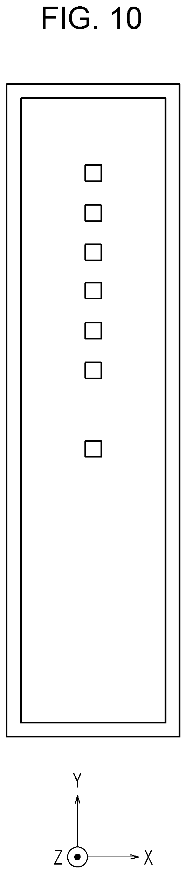

A simulation result based on another configuration will now be presented. FIG. 10 illustrates a configuration obtained by changing the number of the lower radiating elements in the configuration illustrated in FIG. 7 to only one. A simulation result of operation performed by such a configuration will be described below. The same description as that of the above-described simulation will be simplified or omitted below, where appropriate.

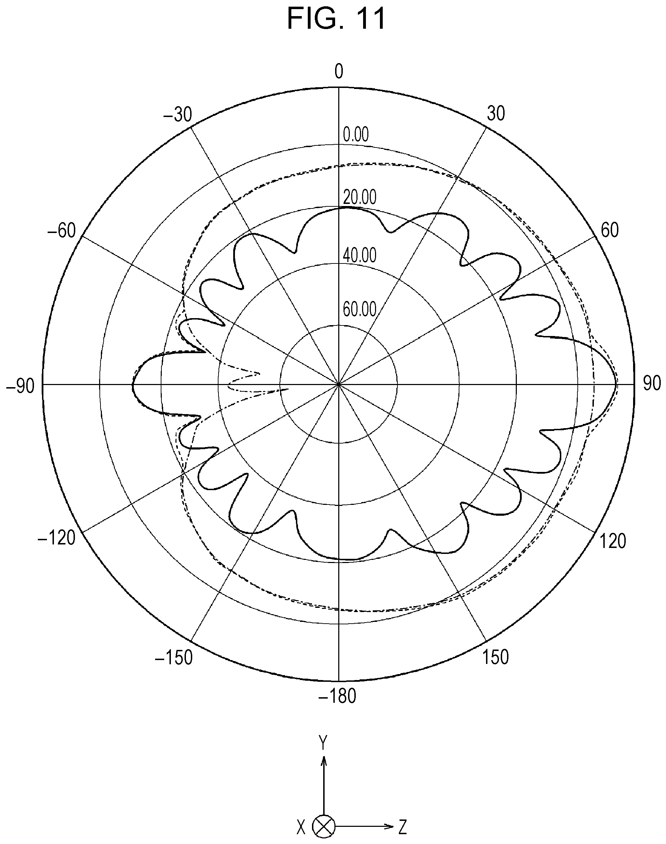

FIG. 11 is a diagram showing a graph plotting the gain of each polarization by the radiating elements illustrated in FIG. 10. Among the curves illustrated in FIG. 11, the solid-line curve represents the gain of the horizontal polarization by the six radiating elements on the upper side illustrated in FIG. 10. The dashed-dotted-line curve represents two gains of the vertical polarization by the one radiating element on the lower side illustrated in FIG. 10. The broken-line curve represents the synthesized gain of the horizontal polarization by the six radiating elements on the upper side and the vertical polarization by the one radiating element on the lower side illustrated in FIG. 10.

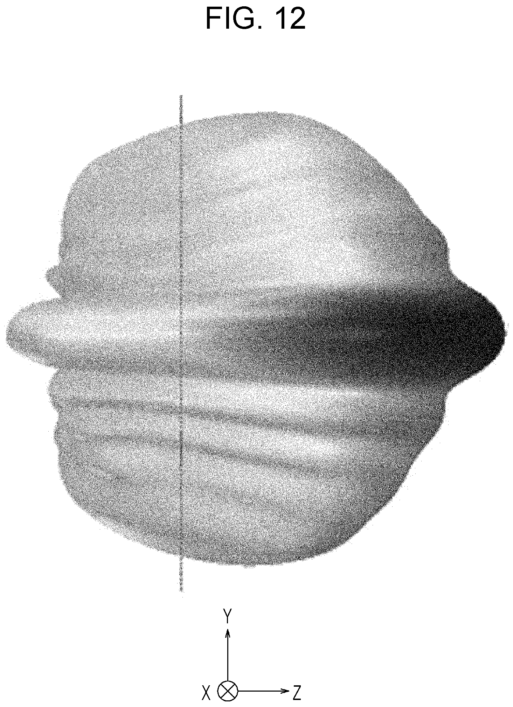

As described above, the configuration illustrated in FIG. 10 is a configuration obtained by changing the number of the lower radiating elements in FIG. 7 to only one. Therefore, as illustrated in FIG. 11, the dashed-dotted-line curve, that is, the gain of the vertical polarization, exhibits a lower peak in the obliquely downward direction of 45° (135°) in comparison with the result illustrated in FIG. 8. On the other hand, as can be seen from FIG. 11, there exists no null point in the dashed-dotted-line curve, that is, the gain of the vertical polarization. Therefore, in the configuration illustrated in FIG. 7, the robustness of detection by means of the vertical polarization can be enhanced. FIG. 12 is a diagram illustrating an example of 3D plotting of the gains illustrated in FIG. 11. With the configuration illustrated in FIG. 10, a reduction in the cost of the apparatus can be achieved.

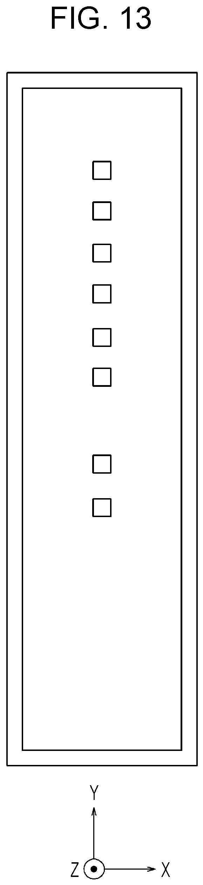

A simulation result based on another configuration will now be presented. FIG. 13 illustrates a configuration obtained by changing the number of the lower radiating elements in the configuration illustrated in FIG. 10 to two. A simulation result of operation performed by such a configuration will be described below. The same description as that of the above-described simulation will be simplified or omitted below, where appropriate.

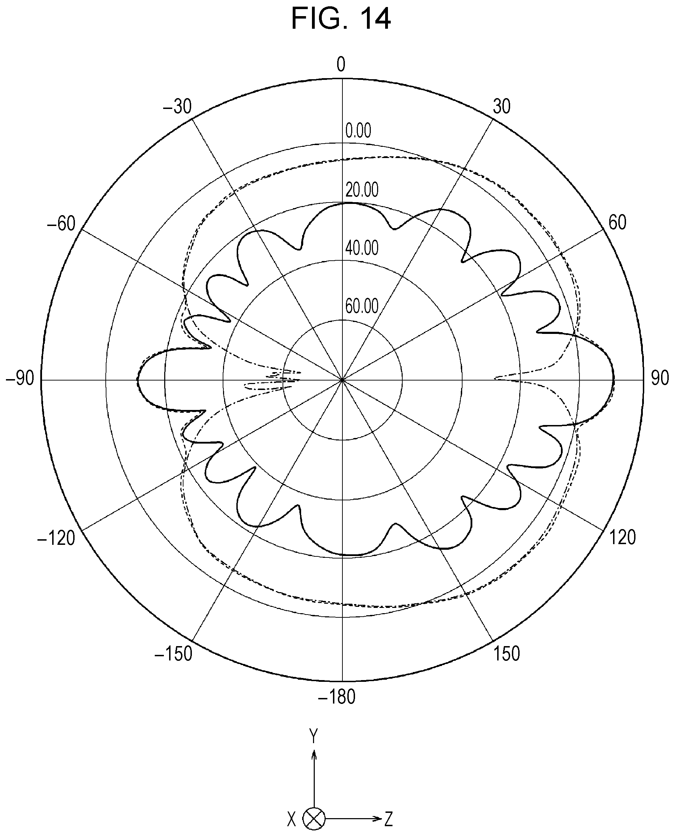

FIG. 14 is a diagram showing a graph plotting the gain of each polarization by the radiating elements illustrated in FIG. 13. Among the curves illustrated in FIG. 14, the solid-line curve represents the gain of the horizontal polarization by the six radiating elements on the upper side illustrated in FIG. 13. The dashed-dotted-line curve represents the gain of the vertical polarization by the two radiating elements on the lower side illustrated in FIG. 13. The broken-line curve represents the synthesized gain of the horizontal polarization by the six radiating elements on the upper side and the vertical polarization by the two radiating elements on the lower side illustrated in FIG. 13.

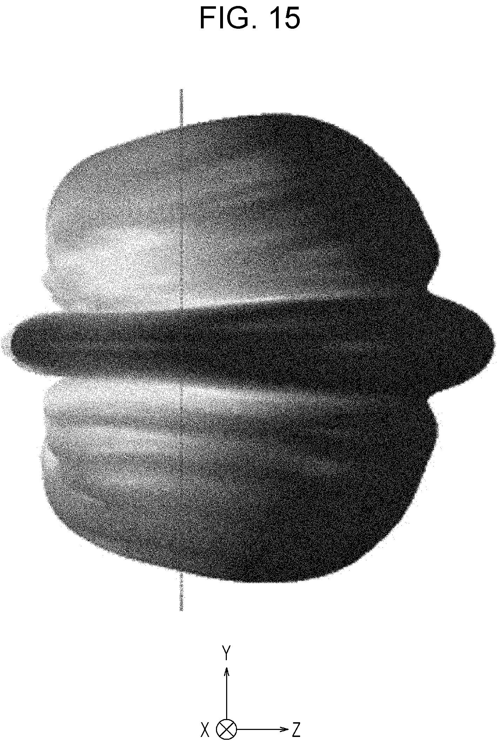

As described above, the configuration illustrated in FIG. 13 is a configuration obtained by changing the number of the lower radiating elements in FIG. 10 to two. With this configuration, as illustrated in FIG. 14, the dashed-dotted-line curve, that is, the direction in which the main lobe of the vertical polarization peaks, can be changed from that of the example illustrated in FIG. 11. With this configuration, as illustrated in FIG. 14, the dashed-dotted-line curve, that is, the gain of the vertical polarization, can be increased in the obliquely downward direction of 45° (135°) in comparison with the result illustrated in FIG. 11. On the other hand, as can be seen from FIG. 14, there exists no null point in the dashed-dotted-line curve, that is, the gain of the vertical polarization, except for the null in the frontward direction (90°). Therefore, also in the configuration illustrated in FIG. 13, the robustness of detection by means of the vertical polarization can be enhanced. FIG. 15 is a diagram illustrating an example of 3D plotting of the gains illustrated in FIG. 14.

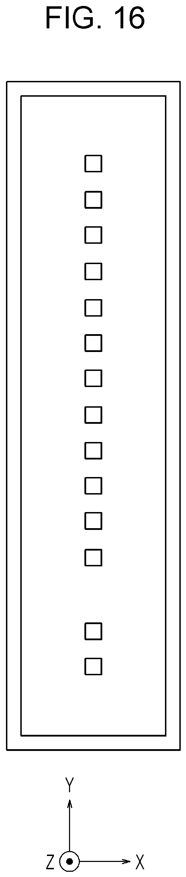

A simulation result based on another configuration will now be presented. FIG. 16 illustrates a configuration obtained by changing the number of the upper radiating elements in the configuration illustrated in FIG. 13 to twelve. A simulation result of operation performed by such a configuration will be described below. The same description as that of the above-described simulation will be simplified or omitted below, where appropriate.

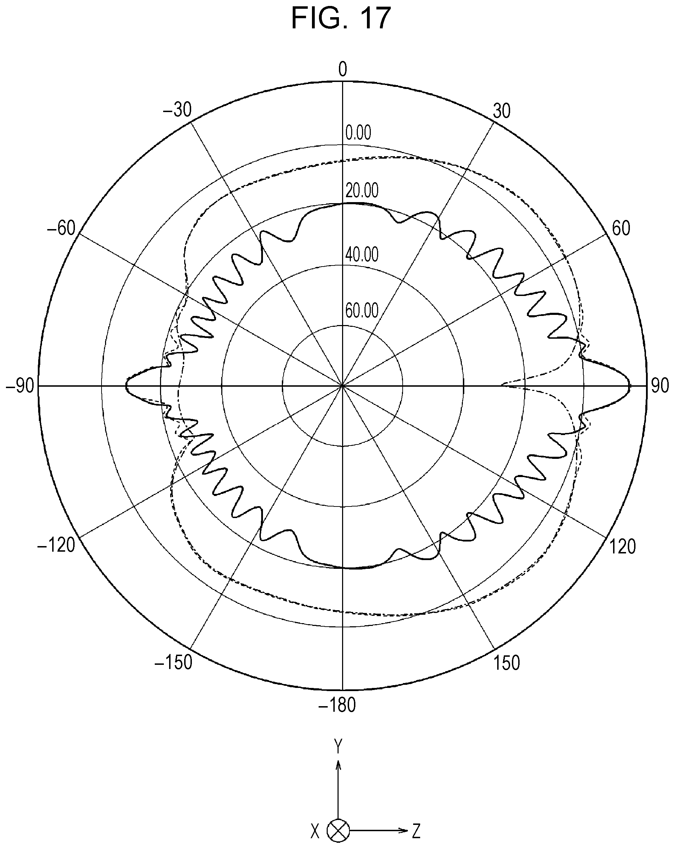

FIG. 17 is a diagram showing a graph plotting the gain of each polarization by the radiating elements illustrated in FIG. 16. Among the curves illustrated in FIG. 17, the solid-line curve represents the gain of the horizontal polarization by the twelve radiating elements on the upper side illustrated in FIG. 16. The dashed-dotted-line curve represents the gain of the vertical polarization by the two radiating elements on the lower side illustrated in FIG. 16. The broken-line curve represents the synthesized gain of the horizontal polarization by the twelve radiating elements on the upper side and the vertical polarization by the two radiating elements on the lower side illustrated in FIG. 16.

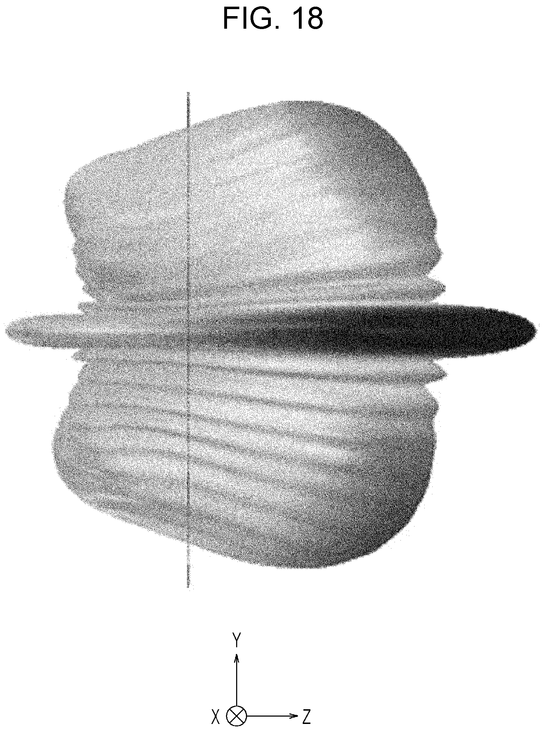

As illustrated in FIG. 1, the electronic device 1 according to an embodiment includes vertically split-in-two reception antennas as the first reception antenna 21 and the second reception antenna 22. Therefore, the gain of the first reception antenna 21 disposed on the upper side is approximately a half of that of a case where the first reception antenna 21 is operated alone. For example, if the six radiating elements on the lower side are not power-fed in the configuration illustrated in FIG. 7, a simulation result obtained in this case is that the maximum gain of the horizontal polarization increases by +3dB in comparison with the result illustrated in FIG. 8 (13.7 dBi). One can see that, to obtain a gain equivalent to the maximum gain of six radiating elements as originally supposed to, so that the gain of the first reception antenna 21 disposed on the upper side will not be reduced to half, arranging twelve radiating elements, the twice of six, suffices. The solid-line curve in FIG. 17 represents the gain of the horizontal polarization by the twelve radiating elements on the upper side illustrated in FIG. 16. In FIG. 17, the gain in the frontward direction (90°) of the solid-line curve is approximately 13.4 dBi. However, in this case, because of the increase in the number of radiating elements, the width of the beam in the frontward direction (90°) of the solid-line curve in FIG. 17 is narrower. FIG. 18 is a diagram illustrating an example of 3D plotting of the gains illustrated in FIG. 17.

A simulation result based on still another configuration will now be presented. In the electronic device 1 described above, the plane of polarization of the first reception antenna 21 and the plane of polarization of the second reception antenna 22 are assumed to be orthogonal. Described below is a result of simulating operation performed by a configuration obtained by configuring the plane of polarization of the upper radiating elements and the plane of polarization of the lower radiating elements to be identical (parallel), instead of being orthogonal, in the configuration illustrated in FIG. 7. The same description as that of the above-described simulation will be simplified or omitted below, where appropriate.

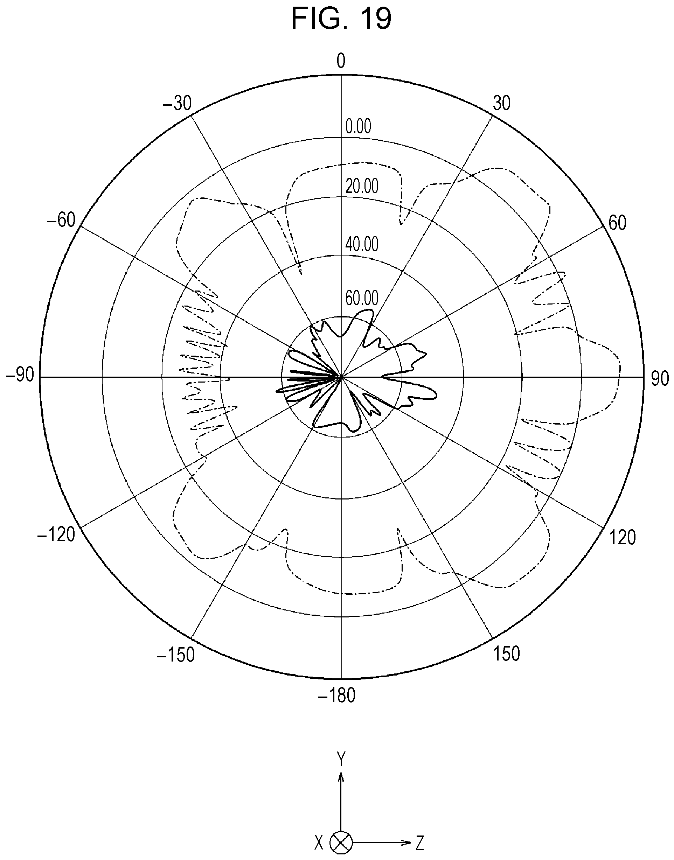

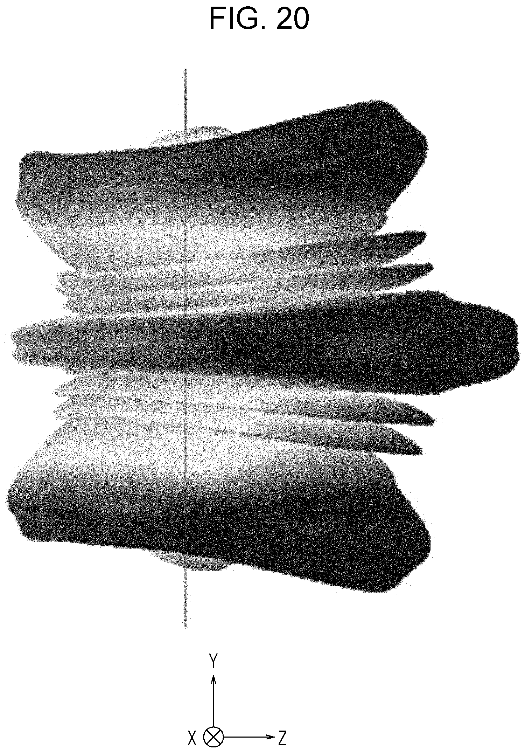

FIG. 19 is a diagram showing a graph plotting the gain of each polarization by the radiating elements illustrated in FIG. 16. Among the curves illustrated in FIG. 19, the solid-line curve represents the gain of the polarization by the six radiating elements on the upper side. The dashed-dotted-line curve represents the gain of the polarization by the six radiating elements on the lower side. As illustrated in FIG. 19, also by this configuration, a relatively good result was obtained for the gain of the polarization in the obliquely downward direction of 45° (135°) by the six radiating elements on the lower side. FIG. 20 is a diagram illustrating an example of 3D plotting of the gains illustrated in FIG. 19.

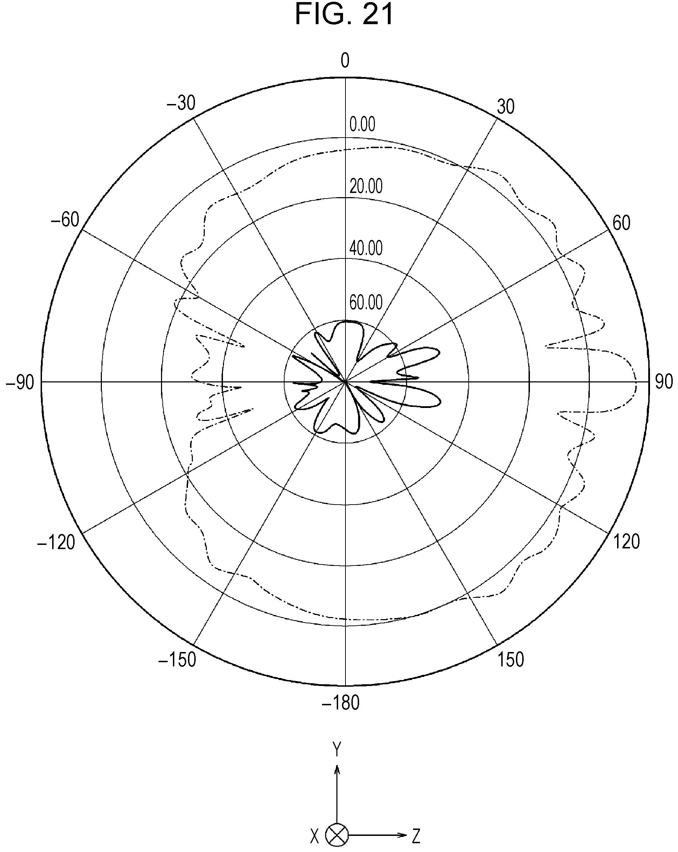

FIG. 21 is a diagram showing a graph plotting the gain of each polarization by a configuration obtained by changing the number of radiating elements in the simulation illustrated in FIG. 19. Illustrated in FIG. 21 is a simulation result of operation by a configuration according to which the number of the lower radiating elements is only one, with the number of the upper radiating elements remaining to be six, in the simulation illustrated in FIG. 19. The solid-line curve represents the gain of the polarization by the six radiating elements on the upper side. The dashed-dotted-line curve represents the gain of the polarization by the one radiating element on the lower side. As illustrated in FIG. 21, also by this configuration, a relatively good result was obtained for the gain of the polarization in the obliquely downward direction of 45° (135°) by the one radiating element on the lower side. However, as illustrated in FIG. 21, in this configuration, sags in gain were observed to some degree, depending on angles.

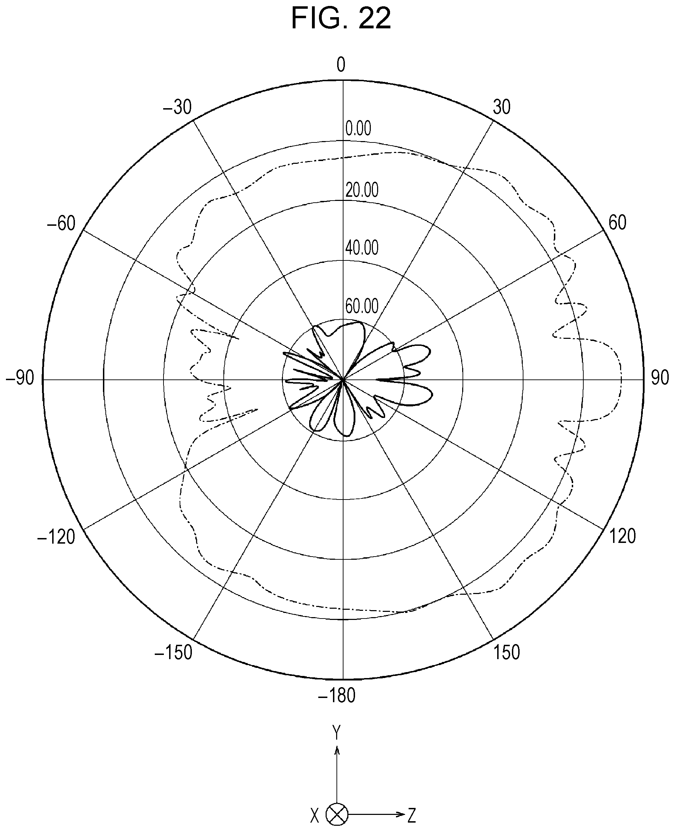

FIG. 22 is a diagram showing a graph plotting the gain of each polarization by a configuration obtained by changing the number of radiating elements in the simulation illustrated in FIG. 19. Illustrated in FIG. 22 is a simulation result of operation by a configuration according to which the number of the lower radiating elements is two, with the number of the upper radiating elements remaining to be six, in the simulation illustrated in FIG. 19. The solid-line curve represents the gain of the polarization by the six radiating elements on the upper side. The dashed-dotted-line curve represents the gain of the polarization by the two radiating elements on the lower side. As illustrated in FIG. 21, also by this configuration, a relatively good result was obtained for the gain of the polarization in the obliquely downward direction of 45° (135°) by the two radiating elements on the lower side. However, as illustrated in FIG. 22, in this configuration, sags in gain were observed to some degree, depending on angles.

As described above, the electronic device 1 according to an embodiment (receiver) may include the first reception antenna 21 and the second reception antenna 22. The first reception antenna 21 has a directivity in the first direction d1. The second reception antenna 22 has a directivity in the second direction d2. The second direction d2 may be a direction different from the first direction d1. The first reception antenna 21 may be configured to maximize the gain of reception when a radio wave received by the first reception antenna 21 is polarized in a first polarization direction (polarized horizontally). The second reception antenna 22 may be configured to maximize the gain of reception when a radio wave received by the second reception antenna 22 is polarized in a second polarization direction (polarized vertically). The second polarization direction may be a direction different from the first polarization direction. In the present disclosure, the first reception antenna 21 may be configured such that the closer the polarization direction of a radio wave received by the first reception antenna 21 is to the first polarization direction, the greater the gain of reception becomes. The second reception antenna 22 may be configured such that the closer the polarization direction of a radio wave received by the second reception antenna 22 is to the second polarization direction, the greater the gain of reception becomes. The second polarization direction may be a direction different from the first polarization direction.

At least one of the first reception antenna 21 or the second reception antenna 22 may be power-fed from feeding points (the feeding points 40A to 40d) on the substrate 10.

The first reception antenna 21 and the second reception antenna 22 may include patch antennas. In this case, the patch antenna of the first reception antenna 21 may be power-fed in the horizontal direction. The patch antenna of the second reception antenna 22 may be power-fed in the vertically from-up-to-down direction. The first direction d1 of the directivity of the first reception antenna 21 may be a substantially horizontal direction. The second direction d2 of the directivity of the second reception antenna 22 may be a direction that contains a vertically down direction component with respect to the horizontal direction.

With the electronic device 1 according to an embodiment, the directivities of reception antennas can be oriented in a frontward direction and an obliquely downward direction without using an RF switch, etc. With the electronic device 1 according to an embodiment, when the directivities of reception antennas are oriented in a frontward direction and an obliquely downward direction, different characteristics can be used for purposes, one as a high-gain reception antenna with a narrow beam width, and the other as a low-gain reception antenna with a wide beam width. With the electronic device 1 according to an embodiment, by changing antenna polarization in two directions such as a frontward direction and an obliquely downward direction, interference between elements that arise when directivities in different orientations are synthesized is suppressed. By this means, the electronic device 1 according to an embodiment enhances the degree of freedom in design and the ease of design. More particularly, the electronic device 1 according to an embodiment enables the handling of feeding circuitry as individual array antennas by splitting the feeding circuitry in two, which are an antenna element portion in the frontward direction and an antenna element portion in the downward direction. Therefore, the electronic device 1 according to an embodiment makes directivity design easier. The electronic device 1 according to an embodiment makes the distribution of feeding power in the frontward direction and the obliquely downward direction also easier, and gain design also easier. With the electronic device 1 according to an embodiment, with regard to the positions of split-in-two antennas, the antenna having the directivity in the frontward direction can be disposed on the upper side with respect to the ground, and the antenna having the directivity in the obliquely downward direction can be disposed on the lower side with respect to the ground. With the electronic device 1 according to an embodiment, by having this configuration, interference between elements, inclusive of a redome, can be suppressed, and design can be made easier. As described above, with the electronic device 1 according to an embodiment, the designability of antenna directivities can be improved.

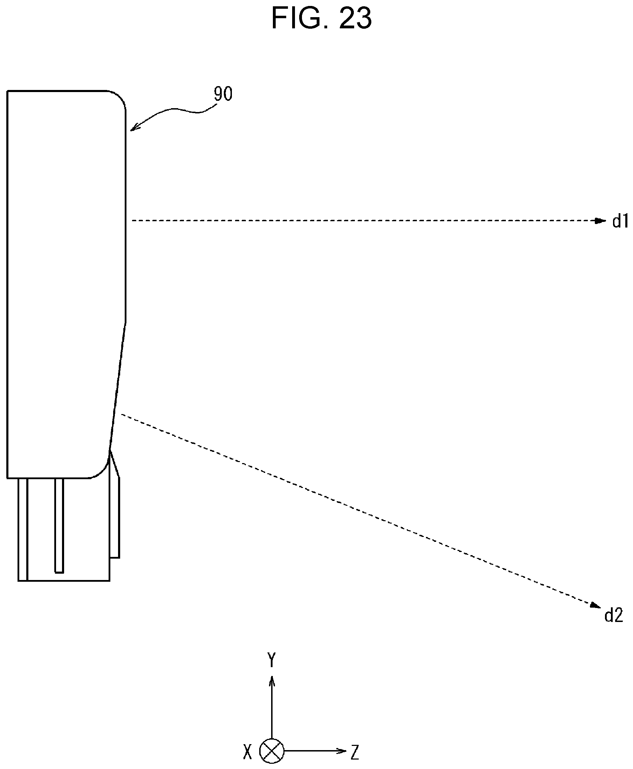

A redome suited for the electronic device 1 according to an embodiment will now be described. FIG. 23 is a diagram illustrating a configuration example of a redome that can be implemented on the electronic device 1 according to an embodiment.

As illustrated in FIG. 1, in the electronic device 1 according to an embodiment, the first transmission antenna 11 and the second transmission antenna 12 may be arranged adjacent to each other in the left-right direction, and the third transmission antenna 13 may be arranged below them. In this case, the electronic device 1 according to an embodiment may include a redome 90 such as the one illustrated in FIG. 23. FIG. 23 illustrates a state in which the electronic device 1 according to an embodiment, inclusive of the substrate 10, is covered by the redome 90. In FIG. 23, the electronic device 1 according to an embodiment is viewed laterally. The direction d1 and the direction d2 shown in FIG. 23 may correspond to the direction d1 and the direction d2 shown in FIG. 3.

As illustrated in FIG. 23, the front (the surface oriented in the positive Z-axis direction) of the redome 90 suited for the electronic device 1 according to an embodiment may have a shape of being chamfered downward (the negative Y-axis direction). The shape of the redome 90, by being configured in this way, is approximate to a shape that satisfies the following relations: the distance from the antenna built in the redome 90 to the redome 90 is λ₀/2; and the thickness of the redome 90 is λ₀/2·(εr)^(-0.5). With this layout, advantageous effects can be obtained from the electronic device 1 according to an embodiment, by being equipped with the redome 90 such as the one illustrated in FIG. 23.

As described above, the electronic device 1 according to an embodiment may be equipped with the redome 90 covering at least one of the first reception antenna 21 or the second reception antenna 22. The redome 90 may have a shape that reduces radio wave passing loss in the first direction d1 and the second direction d2. The redome 90 may have a shape satisfying that the distance from at least one of the first reception antenna 11 or the second reception antenna to the redome 90 is λ/2 and that the thickness of the redome 90 is λ/2·(εr)^(-0.5). λ denotes a wavelength of a reception signal that at least one of the first reception antenna 21 or the second reception antenna 22 receives. ε denotes a dielectric constant of the redome 90. εr denotes a relative dielectric constant (ε/ε₀) that is the ratio of the dielectric constant of the redome 90 to a dielectric constant ε₀ in a vacuum. In the present disclosure, εr denotes a relative dielectric constant (ε/ε₀) that is the ratio of the dielectric constant ε in a medium in which an electromagnetic wave exists to the dielectric constant ε₀ in a vacuum. In the present disclosure, a dielectric constant ε₀' in air may be used in place of the dielectric constant ε₀ in a vacuum.

While the present disclosure has been described based on various drawings and embodiments, it is to be noted that a person skilled in the art can easily make various variations or changes based on the present disclosure. Therefore, it is to be noted that these variations or changes are within the scope of the present disclosure. For example, functions and the like included in each functional unit can be reconfigured in such a way as not to cause any logical contradiction. A plurality of functional units or the like may be combined into one or may be divided. Each embodiment according to the present disclosure described above is not limited to strict implementation in accordance with each description of the embodiment, and may be implemented by appropriately combining the features or omitting a part thereof. That is, based on the present disclosure, a person skilled in the art can make various variations and changes to the content of the present disclosure. Therefore, the scope of the present disclosure encompasses these variations and changes. For example, in each embodiment, each functional unit, each means, each step, or the like can be added to another embodiment or replaced with each functional unit, each means, each step, or the like in another embodiment in such a way as not to cause any logical contradiction. In each embodiment, a plurality of functional units, means, steps, or the like may be combined into one or may be divided. Each embodiment according to the present disclosure described above is not limited to strict implementation in accordance with each description of the embodiment, and may be implemented by appropriately combining the features or omitting a part thereof.

For example, the electronic device 1 according to the foregoing embodiments has been assumed in the above description as a receiver or the like that includes the first reception antenna 21 and the second reception antenna 22. However, an electronic device according to an embodiment may be implemented as a transmitter or the like that includes the first transmission antenna 11, the second transmission antenna 12, and the third transmission antenna 13. In this case, the first transmission antenna 11 and the second transmission antenna 12 may transmit, using first polarization, a radio wave having a directivity in the first direction d1. The third transmission antenna 13 may transmit, using second polarization, a radio wave having a directivity in the second direction d2 different from the first direction d1. The first transmission antenna 11 and the second transmission antenna 12 may transmit signals in a first polarization direction (for example, horizontal polarization) by means of a first feeding layout (for example, power is fed in the horizontal direction). The third transmission antenna 13 may transmit a signal in a second polarization direction (for example, vertical polarization) by means of a second feeding layout (for example, power is fed in the vertical direction).

The embodiments having been described above may be implemented as a transmitting-and-receiving system that includes: a transmitter including transmission antennas; and a receiver including reception antennas. In this case, the transmitter may include a first transmission antenna configured to transmit, using first polarization, a radio wave having a directivity in a first direction, and a second transmission antenna configured to transmit, using second polarization, a radio wave having a directivity in a second direction different from the first direction. The receiver may include a first reception antenna having a directivity in the first direction, and a second reception antenna having a directivity in the second direction. The first reception antenna may be configured to maximize the gain of reception when a radio wave received by the first reception antenna is polarized in a first polarization direction. The second reception antenna may be configured to maximize the gain of reception when a radio wave received by the second reception antenna is polarized in a second polarization direction.

The embodiments having been described above are not limited to implementation as the electronic device 1 or a transmitting-and-receiving system. For example, the embodiments having been described above may be implemented as a method for controlling the electronic device 1, a transmitting-and-receiving system, or the like. For example, the embodiments having been described above may be implemented as a program for controlling the electronic device 1, a transmitting-and-receiving system, or the like. For example, the embodiments having been described above may be implemented as a storage medium storing a program configured to be run on the electronic device 1, a transmitting-and-receiving system, or the like, that is, a computer-readable storage medium.

### REFERENCE SIGNS

1 electronic device
10 substrate
11 first transmission antenna
12 second transmission antenna
13 third transmission antenna
21 first reception antenna
22 second reception antenna
31, 32, 33 feeding point
40 feeding point
50 controller
61, 62, 63 transmission port
70 reception port
90 redome

## Claims

1. An electronic device comprising:
a first reception antenna having a directivity in a first direction; and
a second reception antenna having a directivity in a second direction different from the first direction, wherein
as a polarization direction of a radio wave received by the first reception antenna becomes closer to a first polarization direction, a gain of reception by the first reception antenna becomes greater, and
as a polarization direction of a radio wave received by the second reception antenna becomes closer to a second polarization direction different from the first polarization direction, a gain of reception by the second reception antenna becomes greater.

2. The electronic device according to claim 1, wherein
the gain of reception by the first reception antenna is maximized when the radio wave received by the first reception antenna is polarized in the first polarization direction, and
the gain of reception by the second reception antenna is maximized when the radio wave received by the second reception antenna is polarized in the second polarization direction.

3. The electronic device according to claim 1, wherein
the first reception antenna is power-fed from a feeding point on a substrate, and
the second reception antenna is power-fed from the feeding point.

4. The electronic device according to claim 1, further comprising:
a redome covering the first reception antenna and the second reception antenna, wherein
the redome has a shape that reduces radio wave passing loss in the first direction and the second direction.

5. The electronic device according to claim 4, wherein
the redome has a shape satisfying that a distance from at least one of the first reception antenna or the second reception antenna to the redome is λ/2 and that a thickness of the redome is λ/2·(εr)^(-0.5), where λ denotes a wavelength of a reception signal received by the at least one of the first reception antenna and the second reception antenna, ε denotes a dielectric constant of the redome, and εr denotes a relative dielectric constant (ε/ε₀) that is a ratio of the dielectric constant ε in a medium in which an electromagnetic wave exists to a dielectric constant ε₀ in a vacuum.

6. The electronic device according to claim 1, wherein
at least one of polarization in the first polarization direction or polarization in the second polarization direction is any of linear polarization, elliptical polarization, and circular polarization.

7. The electronic device according to claim 1, wherein
the first reception antenna and the second reception antenna include patch antennas,
the patch antenna of the first reception antenna is power-fed in a horizontal direction, and
the patch antenna of the second reception antenna is power-fed in a vertical direction.

8. The electronic device according to claim 1, wherein
the first direction of the directivity of the first reception antenna is a substantially horizontal direction, and
the second direction of the directivity of the second reception antenna is a direction that contains a vertically down direction component with respect to a horizontal direction.

9. The electronic device according to claim 1, wherein
the first reception antenna and the second reception antenna receive signals having a same frequency.

10. An electronic device comprising:
a first transmission antenna configured to transmit, using first polarization, a radio wave having a directivity in a first direction; and
a second transmission antenna configured to transmit, using second polarization, a radio wave having a directivity in a second direction different from the first direction, wherein
the first transmission antenna transmits a signal in the first polarization direction by means of a first feeding layout, and
the second transmission antenna transmits a signal in the second polarization direction by means of a second feeding layout.

11. A transmitting-and-receiving system comprising:
a transmitter including transmission antennas; and
a receiver including reception antennas,
the transmitter including
a first transmission antenna configured to transmit, using first polarization, a radio wave having a directivity in a first direction, and
a second transmission antenna configured to transmit, using second polarization, a radio wave having a directivity in a second direction different from the first direction,
the receiver including
a first reception antenna having a directivity in the first direction, and
a second reception antenna having a directivity in the second direction, wherein
as a polarization direction of a radio wave received by the first reception antenna becomes closer to a first polarization direction, a gain of reception by the first reception antenna becomes greater, and
as a polarization direction of a radio wave received by the second reception antenna becomes closer to a second polarization direction different from the first polarization direction, a gain of reception by the second reception antenna becomes greater.

12. The transmitting-and-receiving system according to claim 11, wherein
the first reception antenna and the second reception antenna are capable of receiving the radio waves simultaneously.
